# EUROPÄISCHE PATENTANMELDUNG

(11) **EP 3 815 956 A1**
(43) Veröffentlichungstag der Anmeldung: **05.05.2021**
(21) Anmeldenummer: 19205972.3
(22) Anmeldetag: 29.10.2019
(51) Int. Cl.: B60L 50/60

(54) **FAHRERLOSE TRANSPORTVORRICHTUNG UND FAHRERLOSES TRANSPORTSYSTEM ZUM TRANSPORTIEREN VON GEGENSTÄNDEN**

(71) Anmelder: IMS Gear SE & Co. KGaA, 78166 Donaueschingen (DE); Antrimon (Deutschland) GmbH, 78554 Aldingen (DE)
(72) Erfinder: Nagel, Benedikt, 78085 Brigachtal (DE); Belz, Carsten, 78727 Oberndorf (DE); Melnikov, Egor, 78573 Wurmlingen (DE); Gruler, Fabian, 78554 Aixheim (DE); Stöhr, Johannes, 78052 Villingen-Schwenningen (DE); Huber, Matthias, 78187 Gutmadingen (DE); Rosen, Michael, 78073 Bad Dürrheim (DE); Teichmann, Robin, 78467 Konstanz (DE); Hofschulte, Wolfram, 79848 Bonndorf (DE); Abelmann, Yannik, 78144 Tennenbronn-Schramberg (DE); Fürderer, Yvonne, 78120 Furtwangen (DE); Schwörer, Simon, 78086 Brigachtal (DE)
(74) Vertreter: Westphal, Mussgnug & Partner Patentanwälte mbB

(57) **Zusammenfassung**

Die vorliegende Erfindung betrifft eine fahrerlose Transportvorrichtung (10) zum Transportieren von Gegenständen (38) umfassend eine Tragstruktur (12) mit einer Außenkontur (14), ein an der Tragstruktur (12) befestigtes Fahrwerk (16) mit zumindest einem ersten Rad (18) und einem zweiten Rad (20), wobei das erste Rad (18) um eine erste Drehachse (D1) und das zweite Rad (20) um eine zweite Drehachse (D1) drehbar im Fahrwerk (16) gelagert sind, eine Antriebseinheit (22), mit welcher das erste Rad (18) und das zweite Rad (20) unabhängig voneinander antreibbar sind, eine mit der Tragstruktur (12) zusammenwirkende Hubeinrichtung (32) zum Anheben und Absenken zumindest eines Tragabschnitts (39), der zum Transportieren der Gegenstände mit denselben zusammenwirkt, und einen Speicher (70) für elektrische Energie, welcher in der Draufsicht abschnittsweise über die Außenkontur (14) der Tragstruktur (12) hervorragt, wobei der Speicher (70) bewegbar an der Tragstruktur (12) befestigt ist.

## Beschreibung

Die vorliegende Erfindung betrifft eine fahrerlose Transportvorrichtung und ein fahrerloses Transportsystem zum Transportieren von Gegenständen. Weiterhin betrifft die Erfindung ein Verfahren zum Betreiben einer fahrerlosen Transportvorrichtung und eines fahrerlosen Transportsystems zum Transportieren von Gegenständen.

Im Zuge der fortschreitenden Digitalisierung von industriellen Prozessen wird auch der Transport von Gegenständen zunehmend automatisiert durchgeführt. Hierzu werden sogenannte fahrerlosen Transportvorrichtungen und fahrerlosen Transportsysteme (ATS) verwendet, welche auch als *"Automated Guide Vehicles"* (AGV) bezeichnet werden. Bei fahrerlosen Transportsystemen wird eine Mehrzahl von fahrerlosen Transportvorrichtungen zusammengefasst und wie ein Schwarm betrieben. Fahrerlose Transportsysteme werden insbesondere in der Logistik und in der Fertigung eingesetzt, wo verschiedene Gegenstände, beispielsweise Halbzeuge oder andere Komponenten, von einem ersten Ort zu einem zweiten Ort transportiert werden müssen. Dabei können beispielsweise LKWs automatisch be- und entladen werden.

In vielen Fällen werden die Gegenstände mithilfe von Ladungsträgern transportiert, beispielsweise Kisten, Boxen oder Paletten. Aus der DE 10 2013 017 062 A1 ist ein fahrerloses Transportsystem bekannt, welches zwei Förderkufen aufweist, die nach Art einer Gabel eines Gabelstaplers in die länglichen Hohlräume einer Palette eingebracht werden können. Die Förderkufen weisen eine Hubeinrichtung auf, mit welcher die Palette etwas vom Boden angehoben und anschließend zum gewünschten Ort transportiert und dort wieder abgesenkt werden kann.

Aufgrund der Tatsache, dass die Förderkufen eine deutlich größere Erstreckung in Längsrichtung im Vergleich zur Querrichtung aufweisen, ist die Manövrierbarkeit insbesondere dadurch begrenzt, dass vor der Palette ausreichend Platz sein muss, dass die Förderkufen fluchtend zu den Hohlräumen ausgerichtet werden können. Auch die in der EP 2 765 101 A1 gezeigte Vorrichtung weist eine ähnliche Erstreckung wie die zuvor genannten Förderkufen auf, so dass sich auch hier eine begrenzte Manövrierbarkeit ergibt.

Ein weiteres fahrerloses Transportsystem ist in der DE 10 2013 101 561 A1 und der DE 20 2014 104 780 U1 beschrieben, welches Referenzmarken verwendet, die den Weg vorgeben, entlang das fahrerlose Transportsystem bewegt werden kann. Hierdurch ergibt sich eine beschränkte Flexibilität, da der Einsatz außerhalb der Referenzmarken nicht möglich ist. Zudem erfordert das Verlegen der Referenzmarken einen nicht unerheblichen Aufwand.

Aufgabe einer Ausführungsform der vorliegenden Erfindung ist es, eine fahrerlose Transportvorrichtung zum Transportieren von Gegenständen vorzuschlagen, welche sich einfach in bestehende Transportvorgänge einbinden lässt, eine gute Manövrierbarkeit und zusätzliche, bislang noch nicht verfügbare Funktionen bereitstellt und welche über eine vergleichsweise lange Zeit betrieben werden kann.

Darüber hinaus liegt einer Ausgestaltung der Erfindung die Aufgabe zugrunde, ein fahrerloses Transportsystem zu schaffen, mit welchen eine Mehrzahl von fahrerlosen Transportvorrichtungen unter Bereitstellung von zusätzlichen Funktionen über eine vergleichsweise lange Zeit betrieben werden kann.

Diese Aufgabe wird mit den in den Ansprüchen 1 und 11 angegebenen Merkmalen gelöst. Vorteilhafte Ausführungsformen sind Gegenstand der Unteransprüche.

Eine Ausführungsform der Erfindung betrifft eine fahrerlose Transportvorrichtung zum Transportieren von Gegenständen, umfassend
- eine Tragstruktur mit einer Außenkontur,
- ein an der Tragstruktur befestigtes Fahrwerk mit zumindest einem ersten Rad und einem zweiten Rad, wobei das erste Rad um eine erste Drehachse und das zweite Rad um eine zweite Drehachse drehbar im Fahrwerk gelagert sind,
- eine Antriebseinheit, mit welcher das erste Rad und das zweite Rad unabhängig voneinander antreibbar sind, und
- einen Speicher für elektrische Energie, welcher in der Draufsicht abschnittsweise über die Außenkontur der Tragstruktur hervorragt, wobei der Speicher bewegbar an der Tragstruktur befestigt ist.

Die Gegenstände, welche mit der fahrerlosen Transportvorrichtung transportiert werden können, sind insbesondere Ladungsträger wie Paletten, Kisten oder Boxen, auf oder in denen Güter und Waren abgelegt sind. Allerdings lassen sich auch andere Gegenstände unter Verwendung von entsprechenden Adaptern mit der fahrerlosen Transportvorrichtung transportieren, beispielsweise Kinderwagen, Krankenbetten oder Mülltonnen.

Unter der Außenkontur soll der äußere Rand der Tragstruktur verstanden werden, wobei der äußere Rand der Tragstruktur auch von einem Gehäuse gebildet werden kann.

Aufgrund der Tatsache, dass das erste Rad und das zweite Rad unabhängig voneinander antreibbar sind, kann die fahrerlose Transportvorrichtung mit einem sehr kleinen Radius oder sogar auf der Stelle gedreht werden, wodurch die Manövrierbarkeit der fahrerlosen Transportvorrichtung und des transportierten Gegenstands im Vergleich zu bekannten Transportvorrichtungen deutlich erhöht wird.

Die Draufsicht bezieht sich auf den bestimmungsgemäßen Gebrauch, bei welchen das erste Rad und das zweite Rad auf einer Unterlage abrollen. In der Draufsicht schaut man folglich entlang einer Rotationsachse. Je nach Ausführungsform kann die Außenkontur rotationssymmetrisch zur Rotationsachse ausgebildet sein, so dass bei einem Drehen der fahrerlosen Transportvorrichtung um die Rotationsachse keine exzentrischen Abschnitte beispielsweise an die Wandungen der Hohlräume einer Palette anschlagen können. Der Speicher für elektrische Energie, welche beispielsweise zum Antreiben der Räder und zum Betreiben der Sensoreinheit benötigt wird, ragt abschnittsweise über die Außenkontur der Tragstruktur hervor, so dass der Speicher einen exzentrischen Abschnitt bildet. Hierdurch können der vom Speicher umschlossene Raum und seine Ladekapazität vergrößert werden. Allerdings besteht die Gefahr, dass der Speicher beim Drehen an benachbarte Gegenstände, beispielsweise die bereits erwähnten Wandungen der Hohlräume einer Palette, anschlägt. Allerdings ist der Speicher bewegbar an der Tragstruktur befestigt, so dass er dann, wenn er beispielsweise an die Wandungen der Hohlräume einer Palette anschlägt, die weitere Drehung der fahrerlosen Transportvorrichtung nicht beeinträchtigt. Folglich kann in dieser Ausführungsform die Ladekapazität des Speichers vergrößert werden, ohne dass die Manövrierbarkeit der fahrerlosen Transportvorrichtung eingeschränkt wird.

Gemäß einer weiteren Ausführungsform ist die Außenkontur der Tragstruktur in der Draufsicht um eine Rotationsachse im Wesentlichen rotationssymmetrisch und der Speicher ist um die Rotationsachse drehbar an der Tragstruktur befestigt. Die erste und die zweite Drehachse verlaufen üblicherweise im Wesentlichen parallel zu einer Unterlage, auf welcher das erste Rad und das zweite Rad abrollen. Diese Unterlage ist beispielsweise die Ladefläche eines LKWs oder der Boden einer Werkhalle. Die Rotationsachse soll im bestimmungsgemäßen Gebrauch der fahrerlosen Transportvorrichtung, insbesondere dann, wenn diese auf der Unterlage abrollt, im Wesentlichen senkrecht zu der Unterlage verlaufen.

Zum bewegbaren Befestigen des Speichers an der Tragstruktur kann eine ringförmige Nut vorgesehen sein, in welche der Speicher mit einem entsprechend gestalteten Vorsprung formschlüssig eingreift. Insbesondere dann, wenn die fahrerlose Transportvorrichtung auf der Stelle gedreht werden soll und der Speicher an einen benachbarten Gegenstand anschlägt, wird die Drehung nicht behindert. Dabei ist es möglich, die Nut so auszugestalten, dass sie die Tragstruktur vollständig umläuft und in sich geschlossen ist. Folglich ist es möglich, die Transportvorrichtung ohne Begrenzung gegenüber dem Speicher zu drehen, also auch über 360° hinaus.

Nach Maßgabe einer weiteren Ausführungsform ist die Außenkontur der Tragstruktur in der Draufsicht um eine Rotationsachse im Wesentlichen rotationssymmetrisch, wobei der Tragabschnitt und/oder das erste Rad und das zweite Rad innerhalb der Außenkontur angeordnet sind oder bündig mit der Außenkontur abschließen. Die erste und die zweite Drehachse verlaufen üblicherweise im Wesentlichen parallel zu einer Unterlage, auf welcher das erste Rad und das zweite Rad abrollen. Diese Unterlage ist beispielsweise die Ladefläche eines LKWs oder der Boden einer Werkhalle. Die Rotationsachse soll im bestimmungsgemäßen Gebrauch der fahrerlosen Transportvorrichtung, insbesondere dann, wenn diese auf der Unterlage abrollt, im Wesentlichen senkrecht zu der Unterlage verlaufen. Unter der Außenkontur soll der äußere Rand der Tragstruktur verstanden werden, wobei der äußere Rand der Tragstruktur auch von einem Gehäuse gebildet werden kann.

Aufgrund der Tatsache, dass die Außenkontur bezogen auf die Rotationsachse rotationssymmetrisch ist und der Tragabschnitt und/oder das erste Rad und das zweite Rad innerhalb der Außenkontur angeordnet sind, weist die fahrerlose Transportvorrichtung gemäß dieser Ausführungsform keine exzentrischen Abschnitte auf. Wenn sich beispielsweise die fahrerlose Transportvorrichtung in den länglichen Hohlräumen einer Palette befindet und auf der Stelle gedreht werden soll, wird gewährleistet, dass eine Drehung um 360° möglich ist, ohne dass die fahrerlose Transportvorrichtung mit exzentrischen Abschnitten an der Palette anschlägt.

Nach Maßgabe einer weiteren Ausführungsform ist der Speicher lösbar an der Tragstruktur befestigt. Die lösbare Befestigung des Speichers an der Tragstruktur ermöglicht es, den Ladevorgang zu vereinfachen. Insbesondere kann ein leerer Speicher innerhalb von kurzer Zeit gegen einen vollen Speicher ausgetauscht werden. Der leere Speicher kann während der Zeit aufgeladen werden, in welcher der volle Speicher den Betrieb der fahrerlosen Transportvorrichtung sicherstellt. Das Austauschen eines leeren Speichers gegen einen vollen Speicher kann automatisiert werden, so dass einerseits der Austausch rechtzeitig und andererseits mit nur einer geringen zeitlichen Unterbrechung des Betriebs und ohne die Mithilfe eines Benutzers erfolgen kann.

Nach Maßgabe einer weiteren Ausführungsform umfasst die fahrerlose Transportvorrichtung eine mit der Tragstruktur zusammenwirkende Hubeinrichtung zum Anheben und Absenken zumindest eines Tragabschnitts, der zum Transportieren der Gegenstände mit denselben zusammenwirkt. Es ist grundsätzlich möglich, den zu transportierenden Gegenstand beispielsweise mittels eines Krans oder eines Gabelstaplers auf die fahrerlose Transportvorrichtung aufzulegen, um den Gegenstand anschließend zum gewünschten Ziel zu bewegen. In diesem Fall ist es aber notwendig, den zu transportierenden Gegenstand anzuheben, um diesen vom Boden zu entfernen. Die fahrerlose Transportvorrichtung kann aber auch zum Bewegen von Gegenständen verwendet werden, die selbst über Rollen verfügen, beispielsweise Krankenhausbetten oder Mülltonnen. Diese Gegenstände müssen nicht zwangsläufig angehoben werden, um diese bewegen zu können.

Mittels der Hubeinrichtung ist es jedoch möglich, die fahrerlose Transportvorrichtung in eine entsprechende Ausnehmung des zu transportierenden Gegenstands, beispielsweise in den bereits erwähnten länglichen Hohlraum der Palette, hinein zu fahren, wobei die Palette noch auf dem Boden steht. Wenn die fahrerlose Transportvorrichtung in der gewünschten Position ist, wird die Hubeinrichtung aktiviert, wodurch die Palette vom Boden angehoben wird. Anschließend wird die Spreizeinrichtung aktiviert, so dass sich die fahrerlose Transportvorrichtung gegenüber der Palette ausrichten kann. Zudem wird die fahrerlose Transportvorrichtung reibschlüssig mit der Palette verbunden, so dass ein verrutschen der Palette relativ zur fahrerlosen Transportvorrichtung weitgehend vermieden werden kann. Dies kann insbesondere dann relevant sein, wenn die Palette entlang einer geneigten Unterlage transportiert werden soll. Es ist daher auch möglich, Gegenstände zu transportieren, ohne dass diese zuvor angehoben und auf die fahrerlose Transportvorrichtung abgelegt werden. Zudem ist es ebenfalls möglich, Gegenstände zu transportieren, welche selbst keine Rollen oder dergleichen aufweisen, und daher nicht gezogen werden können.

In einer weitergebildeten Ausführungsform kann die Transportvorrichtung eine Sensoreinheit zum Erfassen des Umfelds der Transportvorrichtung aufweisen, wobei die Sensoreinheit in einem von der Außenkontur und der ersten Drehachse oder der zweiten Drehachse begrenzten Sensorabschnitt angeordnet ist, und die Sensoreinheit so ausgebildet ist, dass sie nur den Teil des Umfelds auf der Seite der ersten Drehachse oder der zweiten Drehachse erfasst, auf welcher die Sensoreinheit angeordnet ist.

Aus dem Stand der Technik bekannte fahrerlose Transportvorrichtungen weisen Sensoreinheiten auf, mit denen das unmittelbare Umfeld erfasst werden kann. Beispielsweise können Hindernisse identifiziert und entsprechende Gegenmaßnahmen eingeleitet werden. Je nach Art des Hindernisses kann dieses umfahren oder die fahrerlose Transportvorrichtung angehalten werden. Da von fahrerlosen Transportvorrichtungen eine nicht unerhebliche Gefahr für sich im Umfeld befindende Personen ausgeht, und um den reibungslosen Betrieb zu ermöglichen, muss das Umfeld lückenlos überwacht werden. Folglich muss die Sensoreinheit in der Lage sein, 360° des Umfelds zu erfassen. Die hierzu notwendige Sensorik ist vergleichsweise aufwendig.

In dieser Ausführungsform ist die Sensoreinheit so angeordnet, dass sie maximal 180° des Umfelds erfassen kann. Insbesondere aufgrund der Möglichkeit, die Außenkontur rotationssymmetrisch auszugestalten und die fahrerlose Transportvorrichtung mehr oder weniger auf der Stelle drehen zu können, ist ein Rückwärtsfahren nicht notwendig. Daher genügt es, nur 180° des Umfelds zu erfassen. Die Sensoreinheit ist so angeordnet, dass das in Fahrtrichtung vor der fahrerlosen Transportvorrichtung liegende Umfeld erfasst wird. Infolgedessen können die Sensoreinheit deutlich einfacher aufgebaut und die entsprechende fahrerlose Transportvorrichtung kostengünstiger bereitgestellt werden.

Der Sensorabschnitt soll definitionsgemäß derjenige Abschnitt der fahrerlosen Transportvorrichtungen zwischen der Drehachse und der Außenkontur sein. Für den Fall, dass die fahrerlose Transportvorrichtung mehrere Drehachsen aufweist, soll der Sensorabschnitt derjenige sein, der senkrecht zur Rotationsachse oder in der Draufsicht die kleinste Fläche überstreicht.

Wiederum bezieht sich die Draufsicht auf den bestimmungsgemäßen Gebrauch, bei welchen das erste Rad und das zweite Rad auf einer Unterlage abrollen. In der Draufsicht schaut man folglich entlang der bereits erwähnten Rotationsachse. Je nach Ausführungsform kann die Außenkontur rotationssymmetrisch zur Rotationsachse ausgebildet sein, so dass bei einem Drehen der fahrerlosen Transportvorrichtung um die Rotationsachse keine exzentrischen Abschnitte beispielsweise an die Wandungen der Hohlräume einer Palette anschlagen können. Der Speicher für elektrische Energie, welche beispielsweise zum Antreiben der Räder und zum Betreiben der Sensoreinheit benötigt wird, ragt abschnittsweise über die Außenkontur der Tragstruktur hervor, so dass der Speicher einen exzentrischen Abschnitt bildet. Hierdurch können der vom Speicher umschlossene Raum und seine Ladekapazität vergrößert werden. Allerdings besteht die Gefahr, dass der Speicher beim Drehen an benachbarte Gegenstände, beispielsweise die bereits erwähnten Wandungen der Hohlräume einer Palette, anschlägt. Allerdings ist der Speicher bewegbar an der Tragstruktur befestigt, so dass er dann, wenn er beispielsweise an die Wandungen der Hohlräume einer Palette anschlägt, die weitere Drehung der fahrerlosen Transportvorrichtung nicht beeinträchtigt. Folglich kann in dieser Ausführungsform die Ladekapazität des Speichers vergrößert werden, ohne dass die Manövrierbarkeit der fahrerlosen Transportvorrichtung eingeschränkt wird.

Eine weitergebildete Ausführungsform zeichnet sich dadurch aus, dass der Speicher außerhalb des Sensorabschnitts angeordnet ist. Wie bereits erwähnt, kann der Speicher bewegbar an der Tragstruktur befestigt sein. Um jedoch zu verhindern, dass der Speicher in eine Position gestellt wird, in welcher er die Funktionsweise der Sensoreinheit beeinträchtigt, kann die Bewegbarkeit eingeschränkt werden. Dies kann beispielsweise dadurch geschehen, dass die bereits erwähnte ringförmige Nut nicht in den Sensorabschnitt hineinragt. Auf diese Weise wird trotz der beweglichen Befestigung des Speichers an der Tragstruktur die einwandfreie Funktionsfähigkeit der Sensoreinheit gewährleistet.

Eine weitere Ausführungsform zeichnet sich dadurch aus, dass die Transportvorrichtung zumindest ein Stützrad und/oder einen Borstenabschnitt aufweist. Grundsätzlich ist die Anzahl der Räder, welche im Fahrwerk gelagert ist, frei wählbar. So ist es beispielsweise möglich, drei oder vier Räder vorzusehen, so dass die Transportvorrichtung nicht kippen kann. Allerdings wird einerseits der technische Aufwand gering gehalten und andererseits die Manövrierbarkeit erhöht, wenn nur zwei Räder vorgesehen sind. In diesem Fall kann jedoch die fahrerlose Transportvorrichtung kippen, so dass sie mit einem Teil der Tragstruktur auf der Unterlage aufliegt und über die Unterlage schleift. Um dieses Verkippen zu verhindern, können ein Stützrad und/oder einen Borstenabschnitt vorgesehen werden. Das Stützrad soll sich von den Rädern dahingehend unterscheiden, dass dieses nicht angetrieben ist, aber insbesondere um eine parallel zur Rotationsachse verlaufende Drehachse drehbar ist und daher mitlenken kann. Verständlich können auch mehrere derartiger Stützräder vorgesehen sein.

Der Borstenabschnitt kann mit einer Anzahl von entsprechend belastbaren Borsten versehen werden. Das Vorsehen eines Borstenabschnitts hat ebenfalls den Effekt, ein Verkippen und ein Schleifen zu verhindern. Darüber hinaus wirken die Borsten wie ein Besen und entfernen zumindest kleinere Hindernisse wie Schmutzpartikel aus dem in Fahrtrichtung vor der Transportvorrichtung liegenden Umfeld. Diese Hindernisse wirken sich daher nicht störend auf das Abrollen der Räder auf der Unterlage aus.

Nach Maßgabe einer weiteren Ausführungsform können sämtliche Räder um eine gemeinsame Drehachse drehbar angeordnet sein und die fahrerlose Transportvorrichtung eine Selbststabilisierungseinrichtung aufweisen. In dieser Ausführungsform ist die Transportvorrichtung um die gemeinsame Drehachse drehbar, so dass sie bei einer nicht exakt gleichmäßigen Beladung um diese kippen kann. Infolgedessen kann die Tragstruktur, wie bereits erwähnt, über die Unterlage schleifen. In dieser Ausführungsform weist die fahrerlose Transportvorrichtung eine Selbststabilisierungseinrichtung auf, die beispielsweise einen Neigungssensor oder ein Gyroskop umfassen kann. Wenn festgestellt wird, dass sich die fahrerlose Transportvorrichtung um die gemeinsame Drehachse dreht und die Gefahr besteht, dass die Tragstruktur mit der Unterlage in Berührung kommt, können stabilisierende Gegenmaßnahmen ergriffen werden, um die Neigung der fahrerlosen Transportvorrichtung auf ein unkritisches Maß zu reduzieren. Dies kann beispielsweise durch ein Ansteuern der Antriebseinheit geschehen, so dass die Räder derart gedreht werden, dass ein dem Verkippen entgegenwirkendes Drehmoment erzeugt werden kann. Zudem ist es möglich, Ausgleichsgewichte oder Ausgleichswellen vorzusehen, die je nach Neigung innerhalb der Tragstruktur verschoben werden können, wodurch ebenfalls ein dem Verkippen entgegenwirkendes Drehmoment erzeugt werden kann.

In einer weitergebildeten Ausführungsform kann die Transportvorrichtung einen Signalgeber zum Ausgeben eines Hinweissignals aufweisen. Das Hinweissignal kann insbesondere in optischer und/oder akustischer Form ausgegeben werden. Das Hinweissignal kann in verschiedenen Fällen ausgegeben werden, beispielsweise, wenn die fahrerlose Transportvorrichtung defekt ist, ein unerwartetes Hindernis erfasst wird, welches nicht überwunden werden kann, oder wenn festgestellt wird, dass der zu transportierende Gegenstand zu schwer ist und die fahrerlose Transportvorrichtung infolgedessen überladen werden würde.

Bei einer weitergebildeten Ausführungsform kann die Transportvorrichtung einen Tragegriff zum Ergreifen der Transportvorrichtung aufweisen. Je nach Ausbildung der Transportvorrichtung kann diese weniger als 10 kg schwer sein, so dass sie von einem Benutzer getragen werden kann, wodurch die Transportvorrichtung flexibel von einem Ort zum anderen transportiert werden kann, ohne dass diese den Weg selbst zurücklegen muss. Das Tragen wird durch den Tragegriff erleichtert.

Eine Ausbildung der Erfindung betrifft ein Verfahren zum Betreiben einer fahrerlosen Transportvorrichtung nach einem der zuvor vorgestellten Ausführungsformen, umfassend folgende Schritte:
- Erfassen des Umfelds der Transportvorrichtung mittels einer Sensoreinheit hinsichtlich auswählbarer Eigenschaften, und
- Anheben oder Absenken des Tragabschnitts mittels der Hubeinrichtung in Abhängigkeit der erfassten Eigenschaften des Umfelds.

Eine der aus wählbaren Eigenschaften kann die Ebenheit der Unterlage sein, auf welcher die Transportvorrichtung abrollt. Für den Fall, dass die Sensoreinheit Unebenheiten, beispielsweise in Form von Bodenwellen, erfasst, welche beim Durchfahren zu einem Verrutschen oder einem Herunterfallen der transportierten Gegenstände von der Transportvorrichtung führen könnten, kann der Tragabschnitt entsprechend angehoben oder abgesenkt werden. Auf die transportierten Gegenstände einwirkende Stöße und Erschütterungen werden auf diese Weise gering gehalten und die Gegenstände geschont.

Bei einer weiteren Ausbildung umfasst das Verfahren die folgenden Schritte:
- Definieren einer Ladefläche, die mittels der fahrerlosen Transportvorrichtung mit einer Mehrzahl von Gegenständen beladen werden soll,
- Transportieren eines ersten Gegenstands auf die Ladefläche,
- Bestimmen der hierbei auf den Tragabschnitt wirkenden ersten Kraft mittels der Kraftmesseinrichtung,
- Ablegen des ersten Gegenstands an einer ersten Position der Ladefläche,
- Transportieren eines zweiten Gegenstands auf die Ladefläche,
- Bestimmen der hierbei auf den Tragabschnitt wirkenden zweiten Kraft mittels der Kraftmesseinrichtung, und
- Ablegen des zweiten Gegenstands an einer zweiten Position der Ladefläche, wobei die zweite Position in Abhängigkeit der ersten Kraft und der zweiten Kraft derart gewählt wird, dass die Ladefläche gleichmäßig beladen wird.

Wie erwähnt, kann die Transportvorrichtung so ausgestaltet sein, dass sie das Gewicht des oder der transportierten Gegenstände bestimmen kann. Wenn eine Ladefläche, beispielsweise die Ladefläche eines LKWs, beladen werden soll, kann die Transportvorrichtung so betrieben werden, dass die Ladefläche möglichst gleichmäßig beladen wird. Hierzu werden die Positionen, wo die Gegenstände auf der Ladefläche abgelegt werden, in Abhängigkeit des Gewichts der betreffenden Gegenstände ausgewählt. Eine gleichmäßige Beladung leistet einen Beitrag zur Verkehrssicherheit des betreffenden LKWs und verringert insbesondere die Schleudergefahr. Sinngemäß gilt dies auch für die Beladung von anderen Transportmitteln wie Schiffe und Flugzeuge.

Eine fortentwickelte Ausbildung des Verfahrens gibt folgenden Schritt vor:
- Verändern der ersten Position und/oder der zweiten Position, um die Beladung der Ladefläche zu vergleichmäßigen.

Da das Gewicht der Gegenstände, welche auf der Ladefläche abgelegt werden sollen, nicht notwendigerweise von vornherein bekannt ist, kann es möglich sein, die einmal gewählten Positionen zu verändern, um die Beladung der Ladefläche zu vergleichmäßigen. Das Verfahren gemäß dieser Ausbildung kann beispielsweise so durchgeführt werden, dass die Ladefläche zunächst so weit beladen wird, dass alle Gegenstände, die beispielsweise mit dem LKW transportiert werden sollen, auf seiner Ladefläche abgelegt werden. Die fahrerlose Transportvorrichtung speichert dabei die Position und das Gewicht der Gegenstände, die auf der Ladefläche abgelegt sind. Nach abgeschlossener Beladung verändert dann die fahrerlose Transportvorrichtung die Positionen der entsprechenden Gegenstände innerhalb der Ladefläche derart, dass diese möglichst gleichmäßig beladen wird, sofern dies notwendig sein sollte.

Nach Maßgabe einer fortentwickelten Ausbildung umfasst das Verfahren die folgenden Schritte:
- Definieren einer Höchstbeladung für die Ladefläche, und
- Ausgeben eines Hinweissignals mittels des Signalgebers, wenn die definierte Höchstbeladung erreicht oder überschritten wird.

In dieser Ausbildung des Verfahrens gibt die Transportvorrichtung ein Hinweissignal aus, wenn die Höchstbeladung erreicht oder überschritten wird. Alternativ oder zusätzlich kann die Transportvorrichtung die weitere Beladung der Ladefläche aussetzen. Eine Überladung der Ladefläche wird somit verhindert.

Eine Ausgestaltung der Erfindung betrifft ein fahrerloses Transportsystem, umfassend
- eine Mehrzahl von fahrerlosen Transportvorrichtungen nach einem der vorherigen Ausführungsformen,
- eine Kontrolleinheit zum Steuern oder Regeln der fahrerlosen Transportvorrichtungen, und
- eine Kommunikationseinrichtung, mit welcher Informationen zwischen der Kontrolleinheit und den fahrerlosen Transportvorrichtungen ausgetauscht werden können.

Das fahrerlose Transportsystem umfasst eine Mehrzahl von fahrerlosen Transportvorrichtungen, wobei die Anzahl beliebig gewählt werden kann. Die Mindestanzahl soll zwei betragen. Je nach zu transportierenden Gegenständen wird eine Anzahl von drei oder vier Transportvorrichtungen am geeignetsten sein. Das Transportsystem kann aber auch mehrere Untergruppen von beispielsweise jeweils vier Transportvorrichtungen umfassen, wobei die Anzahl der Transportvorrichtungen der Untergruppen nicht gleich sein muss.

Um Gegenstände mit einer Mehrzahl von fahrerlosen Transportvorrichtungen transportieren zu können, müssen diese koordiniert werden, wozu die Kontrolleinheit dient. Zudem müssen Informationen zwischen der Kontrolleinheit und den fahrerlosen Transportvorrichtungen ausgetauscht werden, um die Koordination umsetzen zu können, wozu die Kommunikationseinrichtung dient. Die Kommunikationseinrichtung kann ein WLAN-Netz oder dergleichen nutzen. Jede der Transporteinrichtungen und die Kontrolleinheit weisen hierzu eine Sender-Empfängereinheit auf. Diese Sender-Empfängereinheit kann auch nach Art einer Relaisstation genutzt werden und als Repeater betrieben werden, um die Stabilität des WLAN-Netzes aufrecht zu erhalten. Insbesondere dann, wenn sich einige der Transportvorrichtungen hinter Gütern befinden, kann das WLAN-Netz nicht ausreichend sein. Die Repeater-Funktion verstärkt das WLAN-Netz auch in Gegenden mit schwachem WLAN-Netz.

In der Kontrolleinheit können die Aufgaben definiert werden, welche das fahrerlose Transportsystem ausführen soll. Insbesondere können die Gegenstände identifiziert werden, welche transportiert werden sollen. Zudem können der aktuelle Standort und der Zielstandort der zu transportierenden Gegenstände definiert werden.

In einer weiteren Ausgestaltung können eine der fahrerlosen Transportvorrichtungen als ein Master ausgebildet und die übrigen der fahrerlosen Transportvorrichtungen als Slaves ausgebildet sein, der Master eine Master-Sensoreinheit zum Erfassen des Umfelds des Masters aufweisen, und der Master das Umfeld des Masters betreffende Informationen an die Kontrolleinheit und/oder an die Slaves übermitteln.

Der Master unterscheidet sich von den Slaves dadurch, dass nur der Master die Master-Sensoreinheit aufweist. Die Slaves weisen entweder überhaupt keine Sensoreinheit oder nur eine deutlich einfacher aufgebaute Sensoreinheit auf. Die Master-Sensoreinheit ist so aufgebaut, dass mit dieser nicht nur das unmittelbare Umfeld des Masters selbst, sondern auch das Umfeld sämtlicher Slaves erfasst werden kann. Insofern muss die Master-Sensoreinheit entsprechend leistungsfähig ausgestaltet sein. Aufgrund der Tatsache, dass die Slaves keine oder nur eine deutlich einfacher aufgebaute Sensoreinheit aufweisen müssen, kann der Aufwand bezüglich der verwendeten Sensoreinheiten reduziert werden. Der erzielbare Vorteil ist umso größer, je mehr Slaves eingesetzt werden. Der Master kann auch mit einer besonders leistungsfähigen Kommunikationseinrichtung ausgestattet sein, um eine ausreichende Netzabdeckung beispielsweise innerhalb der Werkhalle zu gewährleisten. Der Master kann so positioniert werden, dass das Netz, beispielsweise das WLAN-Netz, besonders effektiv verstärkt werden kann, so dass der Informationsaustausch mit allen Slaves gewährleistet ist. Dabei kann der Master seine Position ständig an die Stärke des Netzes und an die Position der Slaves anpassen.

Eine weitergebildete Ausgestaltung ist dadurch gekennzeichnet, dass
- jede der Transportvorrichtungen jeweils eine Sensoreinheit zum Erfassen des Umfelds der Transportvorrichtung aufweist, wobei
- die Sensoreinheit in einem von der Außenkontur und der ersten Drehachse oder der zweiten Drehachse begrenzten Sensorabschnitt angeordnet ist, und
- die Sensoreinheit so ausgebildet ist, dass sie nur den Teil des Umfelds auf der Seite der ersten Drehachse oder der zweiten Drehachse erfasst, auf welcher die Sensoreinheit angeordnet ist, wobei
- zumindest eine erste der Sensoreinheiten in eine erste Richtung und zumindest eine zweite der Sensoreinheiten in eine zweite Richtung ausgerichtet sind.

In dieser Ausgestaltung weisen alle fahrerlosen Transportvorrichtungen, die zu einem Transportsystem zusammengeschlossen sind, dieselben Sensoreinheiten auf. Wenn beispielsweise zwei Transportvorrichtungen zu einem Transportsystem zusammengeschlossen sind, kann die Sensoreinheit der ersten Transportvorrichtung in Fahrtrichtung gesehen nach vorne und die Sensoreinheit der zweiten Transportvorrichtung nach hinten ausgerichtet sein. Insofern lässt sich das Umfeld des fahrerlosen Transportsystems in ausreichendem Umfang überwachen, ohne dass besonders leistungsfähige Sensoreinheiten eingesetzt werden müssten.

Eine Umsetzung der vorliegenden Erfindung betrifft ein Verfahren zum Betreiben eines fahrerlosen Transportsystems nach einem der vorherigen Ausgestaltungen, umfassend folgende Schritte:
- Bestimmen der Kraft, welche auf die jeweiligen Tragabschnitte der Transportvorrichtung wirkt, mittels der Kraftmesseinrichtungen,
- Übermitteln der bestimmten Kräfte an die Kontrolleinheit mittels der Kommunikationseinrichtung,
- Vergleichen der bestimmten Kräfte mittels der Kontrolleinheit, und
- Anheben oder Absenken eines oder mehrerer der Tragabschnitte mittels der Hubeinrichtungen in Abhängigkeit des Vergleichs auf Veranlassung der Kontrolleinheit.

Diese Umsetzung der Erfindung kommt dann zur Anwendung, wenn ein Gegenstand von mehreren Transportvorrichtungen angehoben und transportiert wird. Wird festgestellt, dass die auf einen Tragabschnitt einer ersten Transportvorrichtung wirkende Kraft deutlich von der Kraft abweicht, die auf den Tragabschnitt einer zweiten oder dritten Transportvorrichtung wirkt, so kann dies als ein Zeichen dafür gewertet werden, dass das Gewicht des Gegenstands ungleichmäßig auf die involvierten Transportvorrichtungen verteilt ist. Der Tragabschnitt der ersten Transportvorrichtung wird abgesenkt, wodurch übermäßige Belastungen einer der Transportvorrichtungen vermieden werden. Der Verschleiß der eingesetzten Transportvorrichtungen wird ebenfalls gleichmäßiger.

Eine Variante der vorliegenden Erfindung betrifft ein Verfahren zum Betreiben eines fahrerlosen Transportsystems nach einem der vorherigen Ausgestaltungen, umfassend folgende Schritte:
- Transportieren eines Gegenstands mit zumindest zwei Transportvorrichtungen,
- Erfassen des Umfelds zumindest einer Transportvorrichtung mittels einer Sensoreinheit hinsichtlich auswählbarer Eigenschaften, und
- Anheben oder Absenken der Tragabschnitte mittels der Hubeinrichtungen in Abhängigkeit der erfassten Eigenschaften des Umfelds.

Wie bereits erwähnt kann eine der auswählbaren Eigenschaften die Ebenheit der Unterlage sein, auf welchen die Transportvorrichtungen abrollen. Wenn Unebenheiten wie Bodenwellen erfasst werden, die dazu führen könnten, dass der transportierte Gegenstand zwischen den beiden Transportvorrichtungen auf der Unterlage aufsetzen kann, so werden die Tragabschnitte derart angehoben, dass ein aufsetzen verhindert wird. Störungen im Betriebsablauf werden somit verhindert.

Beispielhafte Ausführungsformen der Erfindung werden im Folgenden unter Bezugnahme auf die beigefügten Zeichnungen näher erläutert. Es zeigen
- Figur 1A: eine perspektivische Darstellung eines ersten Ausführungsbeispiels einer erfindungsgemäßen Transportvorrichtung zum Transportieren von Gegenständen,
- Figur 1B: eine prinzipielle und nicht maßstabsgerechte Draufsicht auf das in Figur 1A dargestellte Ausführungsbeispiel der Transportvorrichtung,
- Figur 2: eine perspektivische Darstellung eines zweiten Ausführungsbeispiels der erfindungsgemäßen Transportvorrichtung,
- Figur 3A: eine isolierte und perspektivische Explosionsdarstellung einer Hubeinrichtung der Transportvorrichtung,
- Figur 3B: eine isolierte Darstellung einer Kraftmesseinrichtung nach einem ersten Ausführungsbeispiel, die in die Hubeinrichtung integriert ist,
- Figur 3C: eine isolierte Darstellung einer Kraftmesseinrichtung nach einem zweiten Ausführungsbeispiel, die in die Hubeinrichtung integriert ist,
- Figur 4: eine prinzipielle Darstellung eines Teils einer Tragstruktur der erfindungsgemäßen Transportvorrichtung nach einem dritten Ausführungsbeispiel, an welcher ein Speicher für elektrische Energie bewegbar an der Tragstruktur befestigt ist,
- Figur 5: eine Draufsicht auf einen Gegenstand, welcher von einem Transportsystem transportiert wird,
- Figur 6A: eine Seitenansicht eines dritten Ausführungsbeispiels der erfindungsgemäßen Transportvorrichtung, die eine Spreizeinrichtung aufweist,
- Figur 6B: eine Draufsicht auf das in Figur 6A dargestellte dritte Ausführungsbeispiel der erfindungsgemäßen Transportvorrichtung,
- Figur 6C: eine Schnittdarstellung durch das dritte Ausführungsbeispiel der Transportvorrichtung entlang der in Figur 6B definierten Schnittebene A-A,
- Figur 6D: eine Schnittdarstellung durch das dritte Ausführungsbeispiel der Transportvorrichtung entlang der in Figur 6B definierten Schnittebene B-B,
- Figur 6E: eine vergrößerte Darstellung des in Figur 6D gekennzeichneten Ausschnitts Q,
- Figur 6F: eine isolierte Darstellung eines Stellelements einer Entkopplungseinheit,
- Figur 7A: eine perspektivische Darstellung eines vierten Ausführungsbeispiels der erfindungsgemäßen Transportvorrichtung, die eine Spreizeinrichtung aufweist,
- Figur 7B: die Spreizeinrichtung der erfindungsgemäßen Transportvorrichtung nach dem vierten Ausführungsbeispiels in einer isolierten Draufsicht, wobei sich die Spreizeinrichtung in einer ersten Stellung befindet,
- Figur 7C: die in Figur 7B dargestellte Spreizeinrichtung in einer zweiten Stellung anhand einer Unteransicht,
- Figur 8: eine Ladefläche, welche mit einer Mehrzahl von Gegenständen unter Verwendung eines Transportsystems beladen wird, und
- Figur 9: eine Werkhalle, in welcher ein Transportsystem eingesetzt wird.

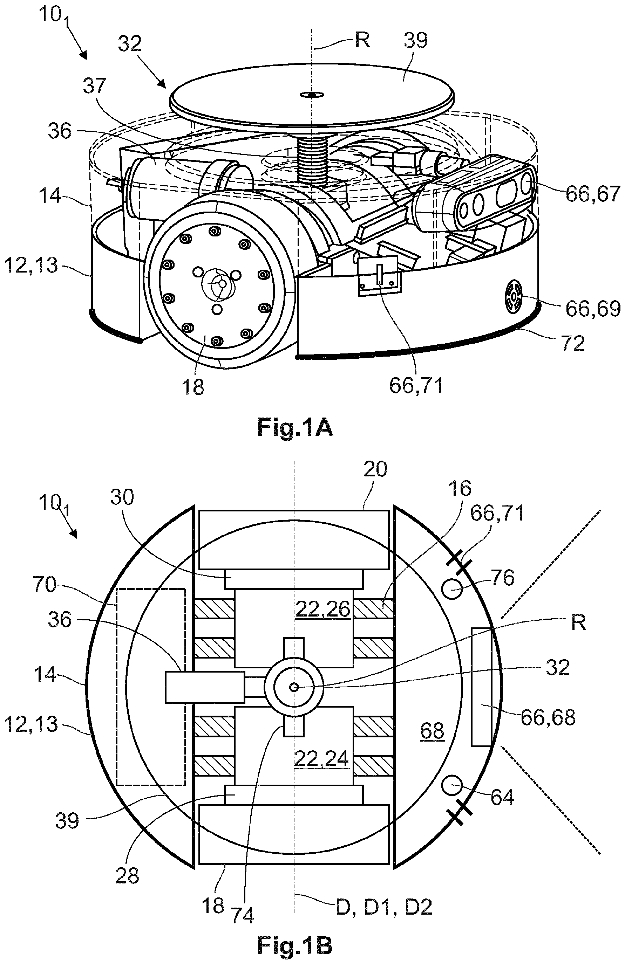

In der Figur 1A und 1B ist ein erstes Ausführungsbeispiel einer Transportvorrichtung 10₁ gemäß der vorliegenden Erfindung gezeigt. In der Figur 1A ist die Transportvorrichtung 10₁ anhand einer perspektivischen Darstellung gezeigt, während in der Figur 1B eine Draufsicht auf die in der Figur 1A gezeigte Transportvorrichtung 10₁ wiedergegeben ist, wobei die Figur 1B nicht maßstäblich und nur prinzipieller Natur ist.

Die Transportvorrichtung 10₁ weist eine Tragstruktur 12 auf, die im vorliegenden Ausführungsbeispiel von einem Gehäuse 13 gebildet wird, welches eine Außenkontur 14 aufweist. Die Außenkontur 14 bezeichnet dabei die äußeren Flächen und Kanten der Tragstruktur 12 oder des Gehäuses 13. An der Tragstruktur 12 ist ein Fahrwerk 16 befestigt, in welchem ein erstes Rad 18 und ein zweites Rad 20 um eine erste Drehachse D1 und eine zweite Drehachse D2 drehbar gelagert sind. Im dargestellten Ausführungsbeispiel fallen die erste Drehachse D1 und die zweite Drehachse D2 zusammen, so dass eine gemeinsame Drehachse D vorliegt.

Die Transportvorrichtung 10₁ umfasst weiterhin eine Antriebseinheit 22, welche ebenfalls an der Tragstruktur 12 befestigt ist. Die Antriebseinheit 22 weist in diesem Fall einen ersten Antriebsmotor 24 und einen zweiten Antriebsmotor 26 auf, wobei der erste Antriebsmotor 24 benachbart zum ersten Rad 18 und der zweite Antriebsmotor 26 benachbart zum zweiten Rad 20 angeordnet sind. Der erste Antriebsmotor 24 ist mit einem ersten Getriebe 28 mit dem ersten Rad 18 und der zweite Antriebsmotor 26 mit einem zweiten Getriebe 30 mit dem zweiten Rad 20 verbunden, so dass die von dem ersten Antriebsmotor 24 und von dem zweiten Antriebsmotor 26 bereitgestellte Drehbewegung direkt an das erste Rad 18 bzw. das zweite Rad 20 übertragen werden können. Der erste Antriebsmotor 24 kann unabhängig vom zweiten Antriebsmotor 26 betätigt werden, so dass das erste Rad 18 und das zweite Rad 20 auch in unterschiedliche Richtungen und mit unterschiedlichen Geschwindigkeiten angetrieben werden können, wodurch die Transportvorrichtung 10₁ gedreht werden kann.

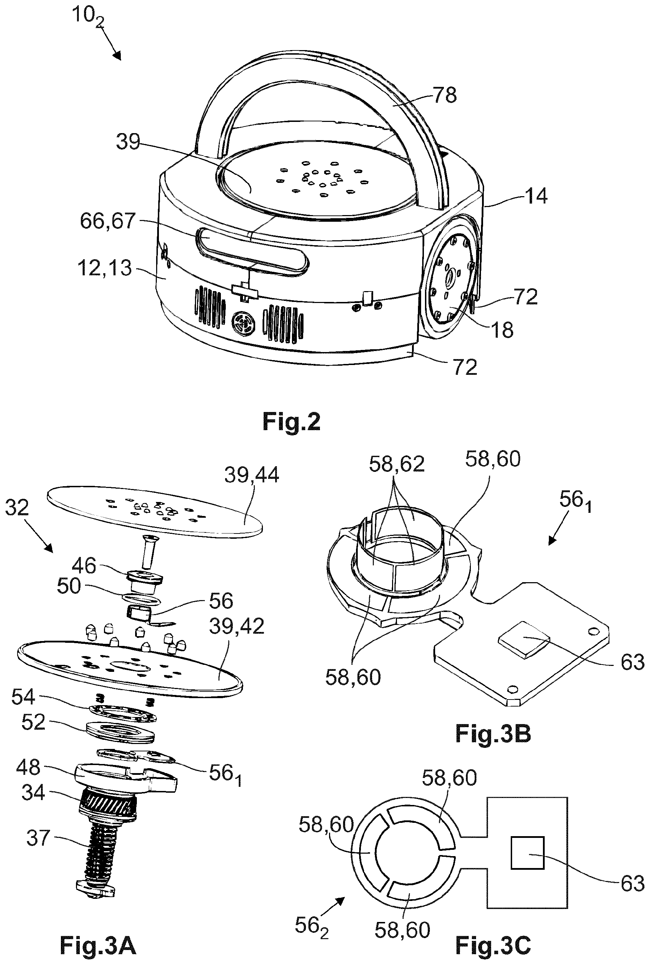

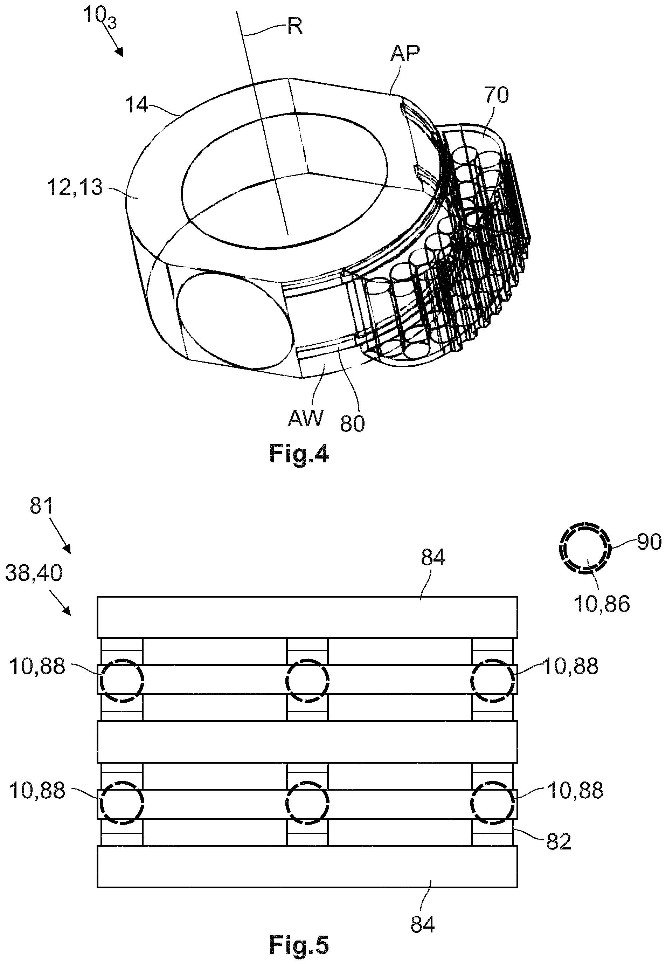

Darüber hinaus umfasst die Transportvorrichtung 10₁ eine Hubeinrichtung 32, welche in Figur 3A separat dargestellt ist. Die Hubeinrichtung 32 ist mit einer Spindelmutter 34 versehen, die mittels eines dritten Antriebsmotors 36 um eine Rotationsachse R gedreht werden kann. Die Rotationsachse R verläuft senkrecht zu der gemeinsamen Drehachse D und im bestimmungsgemäßen Gebrauch vertikal. Die Spindelmutter 34 wirkt mit einer nicht rotierbaren Spindel 37 zusammen, die wiederum mit einem Tragabschnitt 39 verbunden ist, der im ersten Ausführungsbeispiel der Transportvorrichtung 10₁ nach Art eines Drehtellers ausgeführt ist, der gegenüber dem Gehäuse 13 drehbar ist. Wird die Spindelmutter 34 mittels des dritten Antriebsmotors 36 um die Rotationsachse R gedreht, so wird die Spindel 37 und der hiermit verbundene Tragabschnitt 39 entlang der Rotationsachse R bewegt. Bezogen auf den bestimmungsgemäßen Gebrauch der Transportvorrichtung 10₁, der dann vorliegt, wenn das erste Rad 18 und das zweite Rad 20 auf einer in den Figuren 1A und 1B nicht gezeigten Unterlage abrollen, wird der Tragabschnitt 39 je nach Drehrichtung des dritten Antriebsmotors 36 entweder angehoben oder abgesenkt. Zum Transportieren eines Gegenstands 38, beispielsweise einer Palette 40 (siehe Figur 5), wird die Transportvorrichtung 10₁ in einen Hohlraum der Palette 40 hineingefahren und anschließend die Hubeinrichtung 32 derart aktiviert, dass der Tragabschnitt 39 angehoben wird. Der Tragabschnitt 39 wird folglich in Kontakt mit der Palette 40 gebracht, die infolgedessen angehoben wird, so dass sie keinen Kontakt mehr mit der Unterlage aufweist. Anschließend kann die Palette 40 mit der Transportvorrichtung 10₁ an den gewünschten Ort gebracht werden.

Bezug nehmend auf die Figur 3A ist erkennbar, dass der Tragabschnitt 39 der Hubeinrichtung 32 einen Teller 42 und eine mit dem Teller 42 verbundene Noppenmatte 44 aufweist. Die Noppenmatte 44 kann beispielsweise mit dem Teller 42 verklebt sein. Der Teller 42 ist mittels einer Spannhülse 46 mit der Spindel 37 verbunden. Die Spannhülse 46 befestigt gleichzeitig auch ein zum Teller 42 hin offenes Tellergehäuse 48 mit der Spindel 37. Ein O-Ring 50 ist in eine umlaufende Nut der Spannhülse 46 eingebracht und dichtet die Spannhülse 46 gegenüber dem Teller 42 ab. Im Tellergehäuse 48 ist ein Axialrollenlager 52 angeordnet, so dass sich der Tragabschnitt 39 relativ zum Tellergehäuse 48 und der übrigen Transportvorrichtung 10₁ drehen kann. Zwischen dem Axialrollenlager 52 und dem Teller 42 ist ein Gummiring 54 angeordnet. Der Gummiring 54 lässt Kippbewegungen zwischen dem Teller 42 und dem Axialrollenlager 52 zu, welche von einer ungleichmäßigen Belastung des Tragabschnitts 39 hervorgerufen werden.

Darüber hinaus ist eine Kraftmesseinrichtung 56₁ nach einem ersten Ausführungsbeispiel im Tellergehäuse 48 angeordnet, welche in der Figur 3B separat dargestellt ist. Die Kraftmesseinrichtung 56₁ umfasst im ersten Ausführungsbeispiel insgesamt sechs kapazitive Kraftsensoren 58, die sich in eine erste Gruppe 60 und eine zweite Gruppe 62 mit jeweils drei Kraftsensoren 58 unterteilen lässt. Die Hauptflächen der Kraftsensoren 58 der ersten Gruppe 60 liegen bezogen auf den bestimmungsgemäßen Gebrauch der Transportvorrichtung 10₁ in einer horizontalen Ebene, während die Hauptflächen der Kraftsensoren 58 der zweiten Gruppe 62 senkrecht zu den Hauptflächen der Kraftsensoren 58 der ersten Gruppe 60 ausgerichtet sind. Die Kraftsensoren 58 der ersten Gruppe 60 sind kreisringsektorförmig ausgebildet, während die Kraftsensoren der zweiten Gruppe 62 zylindersektorförmig ausgebildet sind. Die Hauptflächen der Kraftsensoren 58 der zweiten Gruppe 62 liegen im bestimmungsgemäßen Gebrauch der Transportvorrichtung 10₁ in einer vertikalen Ebene. Anstelle der kapazitiven Kraftsensoren 58 können auch resistive Kraftsensoren, Dehnungsmessstreifen oder eine gedruckte Elektronik zum Einsatz kommen.

In Figur 3C ist ein zweites Ausführungsbeispiel der Kraftmesseinrichtung 56₂ dargestellt, welches sich von der Kraftmesseinrichtung 56₁ nach dem ersten Ausführungsbeispiel im Wesentlichen dadurch unterscheidet, dass sie nur drei kapazitive Kraftsensoren 58 aufweist, welche zur ersten Gruppe 60 zugeordnet werden können.

In beiden Fällen ist es möglich, horizontal wirkende Kräfte und vertikal wirkende Kräfte zu messen. Zudem können je nachdem, wie die Kraftsensoren 58 mechanisch gelagert sind, Kipp-, Dreh- und Schiebebewegungen gemessen werden.

Im ersten Ausführungsbeispiel der Kraftmesseinrichtung 56₁ dienen die Kraftsensoren 58 der ersten Gruppe 60 dazu, vertikal wirkende Kräfte zu bestimmen. Die Kraftsensoren 58 der zweiten Gruppe 62 werden zum Bestimmen von horizontal wirkenden Kräften verwendet. Aufgrund der Aufteilung der Kraftsensoren 58 in die erste Gruppe 60 und die zweite Gruppe 62 können die verschiedenen Lastfälle genauer voneinander unterschieden werden als es beim zweiten Ausführungsbeispiel der Kraftmesseinrichtung 56₂ der Fall ist. Da grundsätzlich die verschiedenen Lastfälle mit steigender Anzahl von Kraftsensoren 58 besser beschrieben werden können, ist man bestrebt, die Anzahl der Kraftsensoren 58 zu erhöhen. Allerdings wächst hierdurch der Platzbedarf. Die Anordnung der Kraftsensoren 58 der ersten Gruppe 60 senkrecht zu den Kraftsensoren 58 der zweiten Gruppe 62 steigert einerseits die Genauigkeit, mit welcher die Lastfälle beschrieben werden können, andererseits hält sich der hierfür notwendige Bauraum in vertretbaren Grenzen.

Die Kraftsensoren 58 wirken mit einer Auswerteeinheit 63 zusammen, so dass die Kräfte, welche auf den Tragabschnitt 39 wirken, ermittelt werden können. Zudem lässt sich mithilfe der Auswerteeinheit 63 ermitteln, wie die Kräfte über den Tragabschnitt 39 verteilt sind. Aufgrund der Freiheitsgrade, welche die Lagerung des Tragabschnitts 39 in der Hubeinrichtung 32 vorgibt, können bestimmte Lastfälle, beispielsweise ein Kippen, vorgegeben werden, die bestimmt werden sollen. Zudem hängen die Belastungen, die bestimmt werden können, von der Anordnung der Kraftsensoren 58 relativ zum Tragabschnitt 39 ab.

Die Information der Größe und Verteilung der auf den Tragabschnitt 39 wirkenden Kräfte kann auf verschiedene Weise genutzt werden, worauf später ausführlicher eingegangen wird. An dieser Stelle soll nur darauf verwiesen werden, dass ein Überladen der Transportvorrichtung 10₁ verhindert werden kann. Wenn die auf den Tragabschnitt 39 wirkende Kraft ein bestimmtes Maß überschreitet, kann das Anheben des Tragabschnitts 39 unterbrochen und mittels eines Signalgebers 64 (siehe Figur 1B) ein entsprechendes Hinweissignal ausgegeben werden. Das Hinweissignal kann beispielsweise in optischer und/oder akustischer Form ausgegeben werden.

Bezug nehmend auf die Figuren 1A und 1B weist die Transportvorrichtung 10₁ eine Sensoreinheit 66 auf, mit welcher das Umfeld der Transportvorrichtung 10₁ erfasst werden kann. Insbesondere können Hindernisse und Beschaffenheit der Unterlage, auf welcher die Räder abrollen, ermittelt werden. Die Sensoreinheit 66 kann Kameras 67, Ultraschallsensoren 69, laserbasierte Sensoren 71 oder radarbasierte Sensoren oder dergleichen umfassen, mit denen das Umfeld auch unter unterschiedlichen Bedingungen mit einer ausreichenden Genauigkeit erfasst werden kann. Die Sensoreinheit 66 ist in einem Sensorabschnitt 68 angeordnet, welcher von der Außenkontur 14 und von der gemeinsamen Drehachse D oder einer durch die gemeinsame Drehachse D und die Rotationsachse R verlaufende Ebene begrenzt wird. Dieser Definition zufolge weist die Transportvorrichtung 10₁ zwei derartiger Sensorabschnitte 68 auf, allerdings ist die Sensoreinheit 66 nur in einem dieser Sensorabschnitte 68 angeordnet. Diese Anordnung hat zur Folge, dass die Sensoreinheit 66 nur den Teil des Umfelds erfassen kann, welche auf der Seite der gemeinsamen Drehachse D oder der durch sie verlaufende Ebene angeordnet ist, auf welcher die Sensoreinheit 66 angeordnet ist.

Zudem ist die Transportvorrichtung 10₁ mit einem Speicher 70 für elektrische Energie ausgerüstet, damit die betreffenden Komponenten mit elektrischer Energie versorgt werden können. Wie insbesondere aus der Figur 1B zu erkennen ist, ist die Außenkontur 14 zumindest abschnittsweise rotationssymmetrisch zur Rotationsachse R. Darüber hinaus sind insbesondere der Tragabschnitt 39 und das erste Rad 18 und das zweite Rad 20 innerhalb der Außenkontur 14 angeordnet. Es ragen daher keine Komponenten radial über die Außenkontur 14 heraus. Hieraus ergibt sich der Effekt, dass dann, wenn die Transportvorrichtung 10₁ auf der Stelle gedreht wird, was durch ein entsprechendes Ansteuern des ersten Rads 18 und des zweiten Rads 20 erfolgen kann, keine exzentrischen Abschnitte vorhanden sind, welche an benachbarte Gegenstände anstoßen und die Drehung beeinträchtigen könnten, solange sich die benachbarten Gegenstände in einem Abstand befinden, welcher mindestens dem Radius der Außenkontur 14 um die Rotationsachse R entspricht.

Aus Figur 1A ist erkennbar, dass am unteren Rand des Gehäuses 13 ein Borstenabschnitt 72 angeordnet ist, welcher aus einer Vielzahl von hier nicht explizit erkennbaren Borsten besteht. Wie erwähnt, sind das erste Rad 18 und das zweite Rad 20 auf einer gemeinsamen Drehachse D angeordnet. Folglich kann die Transportvorrichtung 10₁ um die gemeinsame Drehachse D kippen, so dass das Gehäuse 13 auf einer Seite der gemeinsamen Drehachse D auf der Unterlage aufliegt und dann, wenn die Transportvorrichtung 10₁ bewegt wird, auf der Unterlage entlang schleift. Dieses Schleifen wird mit dem Borstenabschnitt 72 verhindert, der zudem einen stabilisierenden Einfluss auf die Transportvorrichtung 10₁ hat. Weiterhin hat der Borstenabschnitt 72 den Effekt eines Besens, so dass zumindest kleinere Partikel entfernt werden und das Abrollen der Räder 18, 20 auf der Unterlage nicht negativ beeinflussen können.

Um die Transportvorrichtung 10₁ um die gemeinsame Drehachse D zu stabilisieren, kann alternativ auch ein oder mehrere Stützräder (nicht gezeigt) eingesetzt werden.

Im dargestellten Ausführungsbeispiel ist die Transportvorrichtung 10₁ weiterhin mit einer Selbststabilisierungseinrichtung 74 ausgerüstet (Figur 1B), welche die Neigung und die Änderung der Neigung der Transportvorrichtung 10₁ um die gemeinsame Drehachse D ermitteln und dieser entgegenwirken kann. Beispielsweise kann die Selbststabilisierungseinrichtung 74 ein Gyroskop oder einen Neigungssensor aufweisen. Stellt die Selbststabilisierungseinrichtung 74 fest, dass die Neigung um die gemeinsame Drehachse D ein kritisches Maß überschreitet, kann die Selbststabilisierungseinrichtung 74 Gegenmaßnahmen einleiten. Die Gegenmaßnahmen können beispielsweise in einem gezielten Beschleunigen oder Abbremsen des ersten Rads 18 und/oder des zweiten Rads 20 bestehen. Alternativ kann eine hier nicht dargestellte Ausgleichswelle angetrieben oder hier ebenfalls nicht dargestellte Gewichte verschoben werden. Sämtliche Maßnahmen dienen dazu, ein der Neigung entgegenwirkendes Drehmoment um die Drehachse D innerhalb der Transportvorrichtung 10₁ zu erzeugen, um die Neigung wieder auf Werte unterhalb des kritischen Maßes zu senken. Anzumerken ist, dass die Selbststabilisierungseinrichtung 74 nur dann eingesetzt werden kann, wenn keine Gegenstände mit der Transportvorrichtung 10₁ transportiert werden.

Darüber hinaus ist die Transportvorrichtung 10₁ mit einer Kommunikationseinrichtung 76 ausgestattet, mit welcher die Transportvorrichtung 10₁ Informationen mit anderen Kommunikationspartnern austauschen kann, auf welche später noch genauer eingegangen wird.

In Figur 2 ist eine perspektivische Darstellung eines zweiten Ausführungsbeispiels der erfindungsgemäßen Transportvorrichtung 10₂ gezeigt. Die Transportvorrichtung 10₂ nach dem zweiten Ausführungsbeispiel ist in weiten Teilen genauso aufgebaut wie die Transportvorrichtung 10₁ nach dem ersten Ausführungsbeispiel. Zusätzlich weist die Transportvorrichtung 10₂ einen Tragegriff 78 auf, welche drehbar an der Tragstruktur 12 befestigt ist. Die Transportvorrichtung 10₁ kann folglich nach Art eines Eimers am Tragegriff 78 ergriffen und transportiert werden.

In Figur 4 ist ein Teil einer Tragstruktur 12 der erfindungsgemäßen Transportvorrichtung 10₃ nach einem dritten Ausführungsbeispiel anhand einer prinzipiellen und perspektivischen Darstellung wiedergegeben, wobei die Tragstruktur 12 als ein Gehäuse 13 ausgebildet ist. An einer der beiden gewölbten Außenflächen AW des Gehäuses 13 sind zwei kreisringsektorförmige Nuten 80 angeordnet, in welche ein Speicher 70 für elektrische Energie formschlüssig eingreifen und lösbar mit dem Gehäuse 13 verbunden werden kann. Der Speicher 70 ist in diesem Ausführungsbeispiel daher nach Art eines Rucksacks außerhalb vom Gehäuse 13 angeordnet und bildet einen exzentrischen Abschnitt. Der Speicher 70 kann innerhalb der beiden Nuten 80 bewegt werden, wobei er sich um die Rotationsachse R dreht. Die Transportvorrichtung 10₁ kann daher innerhalb von gewissen Grenzen auf der Stelle in Räumen bewegt werden, welche nur unwesentlich breiter sind als das Gehäuse 13 an den beiden planen Außenflächen AP. Derartige Räume können die Hohlräume von Paletten 40 sein. Beim Drehen stößt der Speicher 70 an die Wände der Palette 40 an und wird aufgrund der Drehbewegung der Transportvorrichtung 10₁ entlang der Nuten 80 um die Rotationsachse R der Transportvorrichtung 10₁ gedreht. Der Speicher 70 behindert die weitere Drehung der Transportvorrichtung 10₁ nicht.

In der Figur 5 ist eine Draufsicht auf einen Gegenstand 38 gezeigt, welcher mit einem Transportsystem 81 gemäß der vorliegenden Erfindung transportiert werden kann. In der Figur 5 ist der Gegenstand 38 als eine Palette 40 ausgeführt, auf welcher nicht näher gezeigte Gegenstände wie Kisten oder dergleichen abgelegt sein können. Die dargestellte Palette 40 weist drei Querhölzer 82 auf, auf welche insgesamt fünf Bretter 84 aufgenagelt sind. In jedem Querholz 82 sind zwei in Figur 5 nicht erkennbare Aussparungen angeordnet, die jeweils mit den Aussparungen der benachbarten Querhölzer 82 fluchtend angeordnet sind.

Das Transportsystem 81 umfasst insgesamt sieben Transportvorrichtungen 10, welche in den Figuren 1A und 1B beschrieben sind und in der Figur 5 nur prinzipiell dargestellt sind. Sechs der Transportvorrichtungen 10 werden in jeweils eine der Aussparungen der Querhölzer 82 hineingefahren. Anschließend wird die Hubeinrichtung 32 angehoben, so dass die Palette 40 von der Unterlage entfernt und anschließend an den gewünschten Ort transportiert werden kann. Wie aus der Figur 5 ebenfalls erkennbar, ist eine siebte Transportvorrichtung 10₁ nicht in die Aussparungen der Palette 40 eingebracht. Die siebte Transportvorrichtung 10₁ ist als ein sogenannter Master 86 konfiguriert, während die übrigen sechs Transportvorrichtungen 10 als Slaves 88 ausgestaltet sind. Der Master 86 dient insbesondere zur Erfassung des Umfelds, da er außerhalb der Palette 40 positioniert ist und daher im Gegensatz zu den Slaves 88 das Umfeld besser erkennen kann. Unter Verwendung der Kommunikationseinrichtung 76 kann der Master 86 Befehle an die Slaves 88 übermitteln, insbesondere auf Hindernisse bezogen.

Der Master 86 begleitet die Slaves 88 so lange, bis die Palette 40 an den gewünschten Ort transportiert worden ist. Dann wird die Hubeinrichtung 32 entsprechend aktiviert, so dass die Palette 40 wieder auf der Unterlage abgelegt wird. Anschließend fahren die Slaves 88 aus der Palette 40 heraus und können zum Transportieren eines weiteren Gegenstandes verwendet werden. Die sieben Transportvorrichtungen 10 können baugleich sein. Es ist aber auch möglich, den Master 86 mit einer besonders leistungsstarken Master-Sensoreinheit 90 zu versehen, damit das Umfeld besonders großflächig erfasst werden kann.

Für den Fall, dass die Transportvorrichtungen 10 baugleich ausgeführt sind, kann jede der Transportvorrichtungen 10 als ein Master 86 oder ein Slave 88 definiert werden. Die Transportvorrichtungen 10 können also unterschiedlich eingesetzt werden. Wie erwähnt, dient der Master 86 dazu, das Umfeld der Palette 40 möglichst umfangreich zu erfassen. Hierzu benötigt die Sensoreinheit 66 überdurchschnittlich viel elektrische Energie. Aufgrund der Möglichkeit, auch eine der übrigen Transportvorrichtungen 10 als Master 86 einzusetzen, wird verhindert, dass der Speicher 70 einer Transportvorrichtung 10₁ schneller entleert wird als diejenigen der übrigen Transportvorrichtungen 10. Auch werden alle Transportvorrichtungen 10 gleichmäßig belastet, wodurch verhindert wird, dass eine oder mehrere der Transportvorrichtungen 10 schneller verschleißen und eher gewartet werden müssen als andere. Zum Transportieren des weiteren Gegenstands 38 kann eine andere der Transportvorrichtungen 10 als Master 86 eingesetzt werden.

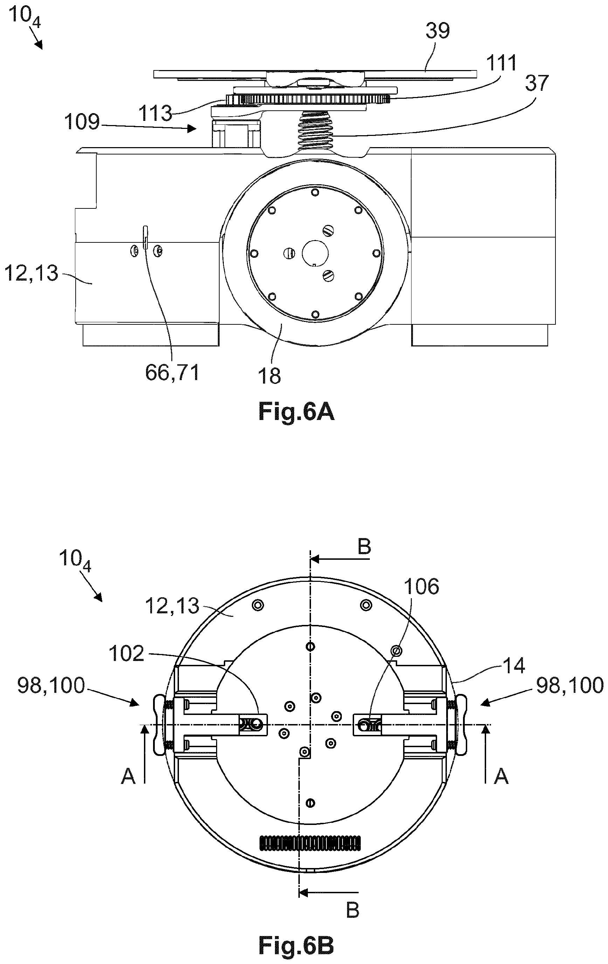

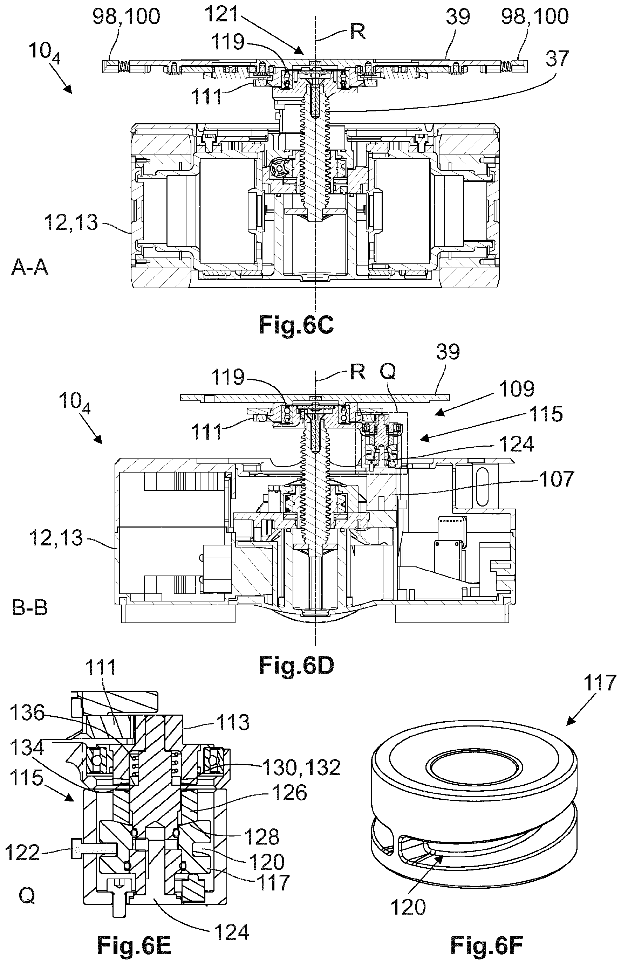

In der Figur 6A ist ein viertes Ausführungsbeispiel der vorschlagsgemäßen Transportvorrichtung 10₄ anhand einer Seitenansicht und in Figur 6B anhand einer Draufsicht gezeigt. Figuren 6C bis 6E zeigen Schnittdarstellungen viertes Ausführungsbeispiel der vorschlagsgemäßen Transportvorrichtung 10₄. Der grundsätzliche Aufbau der Transportvorrichtung 10₄ nach dem vierten Ausführungsbeispiel entspricht weitgehend demjenigen der zuvor beschriebenen Ausführungsbeispiele, so dass im Folgenden nur auf die Unterschiede eingegangen wird.

Die Transportvorrichtung 10₄ nach dem vierten Ausführungsbeispiel umfasst eine Spreizeinrichtung 98, welche im vierten Ausführungsbeispiel der Transportvorrichtung 10₄ zwei Spreizarme 100 umfasst, die mittels einer Verstelleinheit 106 zwischen einer ersten Stellung und einer zweiten Stellung verstellbar sind. In Figur 6B sind die beiden Spreizarme 100 in einer zweiten Stellung dargestellt, in welcher die Spreizarme 100 über die Außenkontur 14 der Tragstruktur 12 herausragen. In der nicht dargestellten ersten Stellung befinden sich die Spreizarme 100 innerhalb der Außenkontur 14, so dass keine exzentrischen Abschnitte vorliegen, die beim Drehen der Transporteinrichtung 10₄ auf der Stelle gegen benachbart angeordnete Gegenstände 38 anstoßen und daher die Drehung behindern könnten. Die Spreizarme 100 sind in Führungsbahnen 102 verschiebbar gelagert, wobei die Führungsbahnen 102 von im Tragabschnitt 39 angeordneten Nuten gebildet werden. Die Führungsbahnen 102 verlaufen ausgehend vom Zentrum der Transportvorrichtung 10₄ radial nach außen, so dass die Spreizarme 100 in einer radialen Richtung bewegt werden können.

Zum Bewegen der Spreizarme 100 zwischen der ersten und der zweiten Stellung umfasst die Spreizeinrichtung 98 neben der Verstelleinheit 106 eine weitere Antriebseinheit 107, welche im Folgenden insbesondere unter Bezugnahme auf die Figuren 6C bis 6E näher beschrieben werden. Die Verstelleinheit 106 und die weitere Antriebseinheit 107 wirken unter Verwendung eines Antriebsstrangs 109 zusammen. Der Antriebsstrang 109 verläuft exzentrisch zur Drehachse R und umfasst ein erstes Zahnrad 111 und ein zweites Zahnrad 113, die in kämmendem Eingriff miteinander stehen, was insbesondere aus Figur 6A hervorgeht. Das erste Zahnrad 111 ist drehfest mit dem Tragabschnitt 39 verbunden. Hierdurch kann die Drehbewegung der weiteren Antriebseinheit 107 auf die Verstelleinheit 106 übertragen werden. Mit der Drehbewegung können die Spreizarme 100 zwischen der ersten Stellung und der zweiten Stellung bewegt werden. Auf die hierzu verwendeten Mechanismen wird später genauer eingegangen.

Wie zuvor erwähnt, ist die Spindel 37 drehfest in der Tragstruktur 12 gelagert. Um den Tragabschnitt 39 und folglich auch die Spreizeinrichtung 98 relativ zum Gehäuse 13 bewegen zu können, ist eine entsprechende Lagereinheit 119 vorgesehen. Um die Drehstellung der Spreizeinrichtung 98 beispielsweise in Bezug auf die erste Drehachse D1 und/oder die zweite Drehachse D2 bestimmen zu können, ist ein Winkelsensor 121 vorgesehen.

Im Antriebsstrang 109 ist eine Entkopplungseinheit 115 angeordnet, mit welcher der Antriebsstrang 109 wahlweise geöffnet und geschlossen werden kann. Die Entkopplungseinheit 115 hat folgenden Zweck: Die Spreizarme 100 dienen dazu, die Transportvorrichtung 104 in der zweiten Stellung mit dem zu transportierenden Gegenstand 38, insbesondere mit einer Palette 40 (siehe Figur 5), zu verspannen, um ein unkontrolliertes Verrutschen zu verhindern. Ein Drehen der Transportvorrichtung 10₄ im verspannten Zustand, insbesondere zum Lenken, wäre dann aber nicht ohne weiteres möglich, da sonst die im Antriebsstrang 109 und in der weiteren Antriebseinheit 107 vorliegenden Widerstände überwunden werden müssten.

Die Entkopplungseinheit 115 umfasst eine Kurvenscheibe 117, welche in Figur 6F separat dargestellt ist. Die Kurvenscheibe 117 ist drehfest, aber axial verschiebbar mit einer Abtriebswelle 124 der weiteren Antriebseinheit 107 verbunden. Die Kurvenscheibe 117 weist in der Mantelfläche eine Nut 120 mit einem wendelförmigen Verlauf und einer bestimmten Steigung auf. Ein in der Tragstruktur 12 verankerter Pin 122 ragt in die Nut 120 ein (Figur 6E). Wird die Kurvenscheibe 117 von der Abtriebswelle 124 gedreht, führt sie neben der rotatorischen Bewegung auch eine translatorische Bewegung parallel zur Rotationsachse R aus. Die translatorische Bewegung der Kurvenscheibe 117 wird auf ein Kupplungselement 126 übertragen, welches ringförmig ausgebildet ist. Das Kupplungselement 126 tritt hierzu über eine erste Stirnfläche 128 mit der Kurvenscheibe 117 in Kontakt. Auf einer zweiten Stirnfläche 130 weist das Kupplungselement 126 eine erste Stirnverzahnung 132 auf, die je nach Position in eine korrespondierende zweite Stirnverzahnung 134 des zweiten Zahnrads 113 eingreifen kann. Im in Figur 6E dargestellten Betriebszustand stehen die erste Stirnverzahnung 132 und die zweite Stirnverzahnung 134 nicht in Eingriff. Stehen die erste Stirnverzahnung 132 und die zweite Stirnverzahnung 134 in Eingriff, so wird die Drehbewegung der Abtriebswelle 124 der weiteren Antriebseinheit 107 auf das erste Zahnrad 111 übertragen, wodurch die Spreizarme 100 bewegt werden. Je nach Drehrichtung der Abtriebswelle 124 wird das Kupplungselement 126 von der Kurvenscheibe 117 zum zweiten Zahnrad 113 hin oder von diesem weg bewegt. Entsprechend können die erste Stirnverzahnung 132 und die zweite Stirnverzahnung 134 in oder außer Eingriff gebracht werden. Um den Kontakt zwischen der Kurvenscheibe 117 und dem Kupplungselement 126 zu gewährleisten, wirkt das Kupplungselement 126 mit einer Rückstellfeder 136 zusammen.

Werden beispielsweise die Spreizarme 100 von der zweiten Stellung in die erste Stellung bewegt, die weitere Antriebseinheit 107 nach Erreichen der ersten Stellung weiter in diese Richtung gedreht, wird hierdurch eine Drehung des Tragabschnitts 39 bewirkt. Auf diese Weise können die Spreizeinrichtung 98 und folglich die Spreizarme 100 gegenüber der Tragstruktur 12 oder dem Gehäuse 13 in eine beliebige Drehstellung gebracht werden. Die Drehstellung kann mit dem Winkelsensor 121 ermittelt werden. Analog gilt dies, wenn die Spreizarme die zweite Stellung erreicht haben.

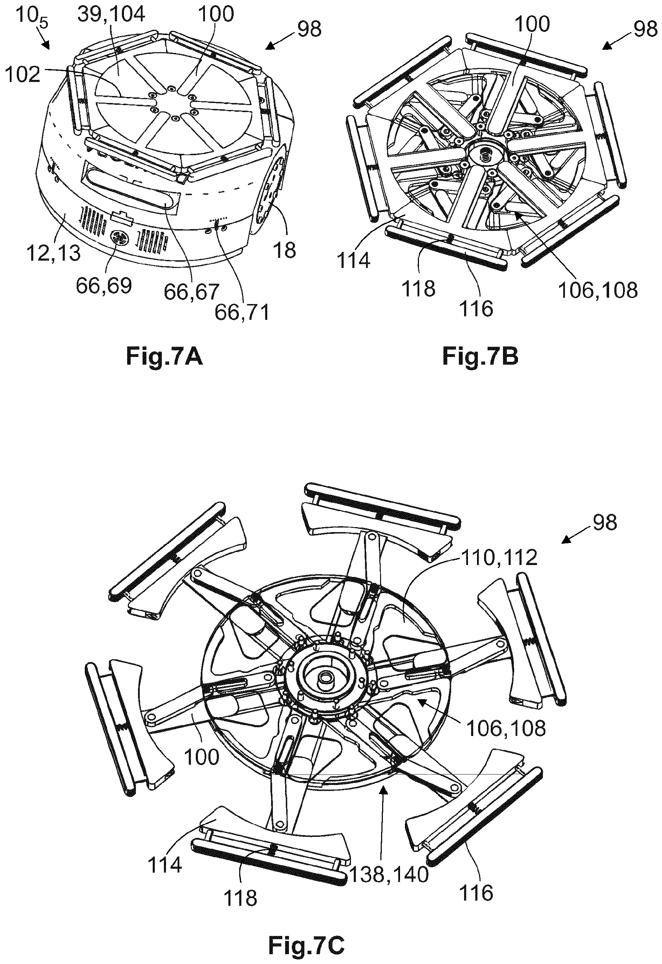

In den Figuren 7A ist ein fünftes Ausführungsbeispiel der erfindungsgemäßen Transportvorrichtung 10₅ anhand einer perspektivischen Darstellung gezeigt. Der Aufbau der Transportvorrichtung 10₅ nach dem fünften Ausführungsbeispiel gleicht weitgehend demjenigen des vierten Ausführungsbeispiels der Transportvorrichtung 10₄, insbesondere, was den Aufbau des Antriebsstrangs 109 und der Verstelleinheit 106 betrifft.

Die Spreizeinrichtung 98 umfasst insgesamt sechs Spreizarme 100, welche sich in der Figur 7B in einer ersten Stellung und in der Figur 7C in einer zweiten Stellung befindet. Auch in der Figur 7A befinden sich die Spreizarme 100 in der ersten Stellung. Man erkennt, dass die Spreizarme 100 nicht über die Außenkontur 14 der Tragstruktur 12 herausragen, wenn sich die Spreizarme 100 in der ersten Stellung befinden. Wie auch im vierten Ausführungsbeispiel der Transportvorrichtung 10₄ sind die Spreizarme 100 in den Führungsbahnen 102 verschiebbar gelagert, wobei die Führungsbahnen 102 von im Tragabschnitt 39 angeordneten Nuten verlaufen, so dass der Tragabschnitt 39 eine entsprechende Anzahl von Kreissektorelementen 104 bildet (siehe Figur 7A). Aus Darstellungsgründen sind die Kreissektorelemente 104 in Figur 7C nicht dargestellt.

Die Führungsbahnen 102 verlaufen ausgehend vom Zentrum der Transportvorrichtung 10₄ radial nach außen, so dass sich die Spreizarme 100 ebenfalls in einer radialen Richtung bewegen können, wie auch aus einem Vergleich der Figuren 7B und Figur 7C hervorgeht. Die Verstelleinheit 106 umfasst pro Spreizarm 100 jeweils eine Kniehebeleinheit 108, die durch Drehen einer Synchronisierungseinheit 110, welche im dargestellten Ausführungsbeispiel eine Kulissenscheibe 112 umfasst, gestreckt oder gestaucht werden können. Durch Strecken der Kniehebeleinheit 108 werden die Spreizarme 100 radial nach außen in die zweite Stellung und durch Stauchen der Kniehebeleinheit 108 in die erste Stellung bewegt. Da die Kulissenscheibe 112 mit allen Kniehebeleinheiten 108 auf dieselbe Weise zusammenwirkt, werden alle Spreizarme 100 gleichzeitig bewegt, wenn die Kulissenscheibe 112 gedreht wird.

Die Spreizeinrichtung 98 umfasst eine Sperreinrichtung 138, mit welcher die Verstelleinheit 106 zumindest dann gesperrt werden kann, wenn sich die Spreizarme 100 in der zweiten Stellung befinden. Im fünften Ausführungsbeispiel der Transportvorrichtung ist die Sperreinrichtung 138 auf folgende Weise realisiert: Die Kulissenscheibe 112 wirkt so mit den Kniehebeleinheiten 108 zusammen, dass die beiden Schenkel der Kniehebeleinheiten 108 in der zweiten Stellung über einen Winkel von 180° hinaus bewegt und folglich überdrückt werden und in der zweiten Stellung an einem Anschlag 140 anliegen. Hierdurch werden die Spreizarme 100 in der zweiten Stellung gesperrt, ohne dass eine Sperrkraft aufgebracht werden muss. Hierdurch ist es möglich, die Spreizarme 100 auch dann in der zweiten Stellung zu halten, wenn der Antriebsstrang 109 geöffnet ist. Insofern wird die Sperreinrichtung 138 weitgehend von der Verstelleinheit 106 selbst gebildet, so dass keine zusätzlichen Elemente hierzu vorgesehen werden müssen. Alternativ kann aber die Sperreinrichtung 138 einen oder mehrere bewegbare Bolzen oder dergleichen umfassen, mit denen die Verstelleinheit 138 gesperrt werden kann.

Darüber hinaus ist an jedem radial äußeren Ende der Spreizarme 100 jeweils ein Anschlagelement 114 mit diesen verbunden. Wie insbesondere aus den Figuren 7A und 7B hervorgeht, schlagen die Anschlagelemente 114 in der ersten Stellung einerseits an den beiden jeweils benachbarten Anschlagelementen 114 an. Darüber hinaus schlagen die Anschlagelemente 114 auch an die Kreissektorelemente 104 an. Hierdurch wird die erste Stellung der Spreizarme 100 eindeutig festgelegt.

An den Anschlagelementen 114 ist jeweils ein Abstützelement 116 bewegbar befestigt, wobei die Abstützelemente 116 mittels einer Feder 118 vorgespannt werden.

Wie insbesondere in Figur 5 dargestellt, kann eine Palette 40 beispielsweise mit insgesamt sechs Transportvorrichtungen 10 transportiert werden. Werden Transportvorrichtungen 10₄, 10₅ nach dem vierte oder fünften Ausführungsbeispiel verwendet, werden diese soweit in einen Hohlraum der Palette 40 hineingefahren, bis sie sich im Bereich des bereits erwähnten Querholz 82 befinden. Die Spreizeinrichtung 98 befindet sich hierbei in der ersten Stellung.

Hat die Transportvorrichtung 10₄, 10₅ die gewünschte Stellung innerhalb des Hohlraums erreicht, wird zunächst die Hubeinrichtung aktiviert, wodurch die Palette 40 angehoben wird. Anschließend wird die Spreizeinrichtung 98 aktiviert, so dass die Spreizarme 100 von der ersten Stellung in die zweite Stellung verstellt werden. Hierbei kommen die Abstützelemente 116 mit den Seitenwänden des Hohlraums der Palette 40 in Kontakt, wodurch die Transportvorrichtung 10₄, 10₅ reibschlüssig mit der Palette 40 verbunden wird. Hierbei werden die Federn 118 komprimiert, so dass stoßartige Belastungen vermieden werden. Darüber hinaus können die Abstützelemente 116 schwimmend gelagert sein, so dass Fertigungsungenauigkeiten zusammen mit den Federn 118 ausgeglichen werden können. Infolgedessen wird die Transportvorrichtung 10₄, 10₅ gegenüber der Palette 40 definiert ausgerichtet. Folglich kann sich die Palette 40 nicht mehr gegenüber der Transportvorrichtung 10₄, 10₅ verschieben. Nun kann die Palette 40 mittels der Transportvorrichtung 10₅ zum gewünschten Ziel bewegt werden.

Wie erwähnt, unterscheidet sich die Transportvorrichtung 10₅ nach dem fünften Ausführungsbeispiel insbesondere in der Anzahl der Spreizarme 100 von der Transportvorrichtung 10₄ nach dem vierten Ausführungsbeispiel. Aufgrund der höheren Anzahl der Spreizarme 100 kann auf den Einsatz des Winkelsensors 121 verzichtet werden, da sich die Spreizeinrichtung 98 selbst so ausrichten kann, dass die Spreizarme 100 weitgehend parallel zu der Fläche des Gegenstands 38 verlaufen, mit welchem die Transportvorrichtung 10₄ verspannt werden soll.

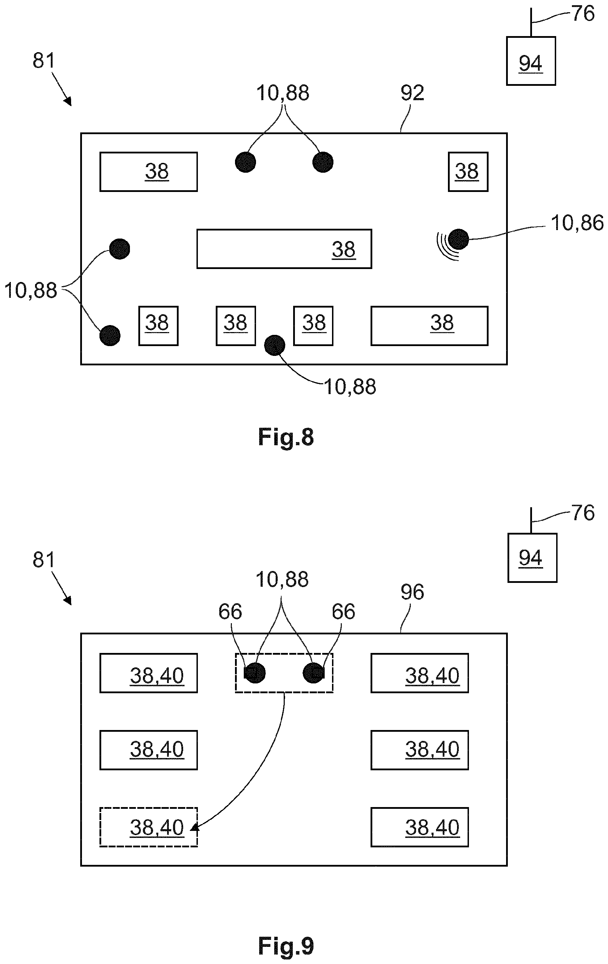

In der Figur 8 ist ein Transportsystem 81 dargestellt, welches insgesamt sechs Transportvorrichtungen 10 aufweist, welche innerhalb einer Werkhalle 92 verteilt angeordnet sind. In der Werkhalle 92 sind verschiedene Gegenstände gelagert, die mit dem Transportsystem 81 transportiert werden sollen. Das Transportsystem 81 umfasst eine Kontrolleinheit 94, mit welcher die Transportvorrichtungen 10 gesteuert oder geregelt werden können. Wie bereits erwähnt, sind die Transportvorrichtungen 10 mit Kommunikationseinrichtungen 76 ausgestattet (siehe Figur 1B), welche den Austausch von Informationen untereinander ermöglichen. Auch die Kontrolleinheit 94 ist mit einer derartigen Kommunikationseinrichtung 76 ausgestattet, so dass die Transportvorrichtungen 10 nicht nur untereinander Informationen austauschen können, sondern auch ein Informationsaustausch zwischen den Transportvorrichtungen 10 und der Kontrolleinheit 94 möglich ist. Die Kontrolleinheit 94 kann beispielsweise Aufgaben definieren, welche die Transportvorrichtungen 10 ausführen sollen, welche beispielsweise darin bestehen können, die verschiedenen Gegenstände 38 von einem Standort zum Zielstandort zu transportieren. Wie erwähnt, befinden sich die Transportvorrichtungen 10 innerhalb einer Werkhalle 92. Die Kontrolleinheit 94 kann außerhalb der Werkhalle 92 angeordnet sein, allerdings ist auch eine Anordnung innerhalb der Werkhalle 92 möglich. Zum Informationsaustausch verwendet die Kommunikationseinrichtung 76 ein drahtloses Netzwerk, beispielsweise ein WLAN oder Bluetooth. Je nach Ausgestaltung und Größe der Gegenstände ist aber nicht immer gewährleistet, dass das WLAN innerhalb der gesamten Werkhalle 92 in ausreichendem Umfang verfügbar ist. Die Funktionsfähigkeit des Transportsystems hängt aber von einem ausreichend verfügbaren WLAN ab. Um das WLAN-Netz zu stabilisieren, können einige oder alle Transportvorrichtungen 10 nach Art eines Repeaters oder einer Relaisstation betrieben werden, so dass gewährleistet ist, dass das WLAN auch in den Ecken der Werkhalle 92 oder hinter oder unter den Gegenständen verfügbar ist. Wie in Verbindung mit der Figur 5 beschrieben, können eine oder mehrere der Transportvorrichtungen 10 als ein Master 86 betrieben werden. Wie ebenfalls erwähnt, dient der Master 86 primär dazu, das Umfeld um den zu transportierenden Gegenstand 38 zu erfassen, allerdings kann der Master 86 auch so positioniert werden, dass das WLAN-Netzwerk zumindest für die ihm zugeordneten Slaves 88 verfügbar ist.

In der Figur 9 ist eine Ladefläche 96, beispielsweise die eines LKWs dargestellt, welche mit dem erfindungsgemäßen Transportsystem 81 beladen wird. Aufgrund der Tatsache, dass mittels der Kraftmesseinrichtung 56 die auf den Tragabschnitt 39 zumindest einer Transportvorrichtung 10 nach einem der zuvor beschriebenen Ausführungsbeispielen wirkende Kraft ermittelt werden kann, kann diese Information auch dazu genutzt werden, die Ladefläche 96 des LKWs möglichst gleichmäßig zu beladen. Im in Figur 9 dargestellten Beispiel soll die Ladefläche 96 mit insgesamt sechs Paletten 40 beladen werden, welche dasselbe Gewicht aufweisen sollen, wovon das Transportsystem 81 zunächst einmal aber nicht ausgehen kann. Als Erstes stellt das Transportsystem 81 insgesamt drei Paletten 40 in eine erste Reihe nebeneinander ab und registriert jeweils die genauen Positionen und das Gewicht der betreffenden Paletten 40 auf der Ladefläche 96. Anschließend transportiert die Transportvorrichtung 10₁ eine vierte Palette 40 in eine zweite Reihe und zum Schluss eine fünfte und eine sechste Palette 40 in eine dritte Reihe. Nachdem auch die sechste und letzte Palette 40 auf die Ladefläche 96 transportiert worden ist, erhält das Transportsystem 81 die Information, dass keine weiteren Paletten 40 auf die Ladefläche 96 beladen werden sollen. Das Transportsystem 81 stellt fest, dass eine ungleichmäßige Beladung der Ladefläche 96 vorliegt. Das Transportsystem 81 ändert die Position der vierten Ladefläche 96 derart, so dass nun die Ladefläche 96 gleichmäßig beladen ist. Die Position der vierten Ladefläche 96 wird wie mit dem Pfeil gekennzeichnet geändert.

Wie erwähnt, weisen die Transportvorrichtungen 10 jeweils einen Signalgeber 64 auf (siehe Figur 1B). Der Signalgeber 64 kann ein Hinweissignal ausgeben, wenn die Paletten 40 so schwer sind, dass die Höchstbeladung der betreffenden Transportvorrichtungen 10 überschritten wird. Das Überschreiten der Höchstbeladung kann mit der Kraftmesseinrichtung 56 erkannt werden.

Weiterhin ist aus der Figur 9 erkennbar, dass die Sensoreinheiten 66 der Transportvorrichtungen 10 in entgegengesetzte Richtungen ausgerichtet sind. Die eine der Transportvorrichtungen 10 erfasst dabei das Umfeld auf der einen Seite der Palette 40, während die andere der Transportvorrichtungen 10 das Umfeld auf der anderen Seite der Palette 40 erfasst.

### Bezugszeichenliste

- 10: Transportvorrichtung
- 10₁ - 10₅: Transportvorrichtung
- 12: Tragstruktur
- 13: Gehäuse
- 14: Außenkontur
- 16: Fahrwerk
- 18: erstes Rad
- 20: zweites Rad
- 22: Antriebseinheit
- 24: erster Antriebsmotor
- 26: zweiter Antriebsmotor
- 28: erstes Getriebe
- 30: zweites Getriebe
- 32: Hubeinrichtung
- 34: Spindelmutter
- 36: dritter Antriebsmotor
- 37: Spindel
- 38: Gegenstand
- 39: Tragabschnitt
- 40: Palette
- 42: Keller
- 44: Noppenmatte
- 46: Spannhülse
- 48: Tellergehäuse
- 50: O-Ring
- 52: Axialrollenlager
- 54: Gummiring
- 56: Kraftmesseinrichtung
- 58: Kraftsensoren
- 60: erste Gruppe
- 62: zweite Gruppe
- 63: Auswerteeinheit
- 64: Signalgeber
- 66: Sensoreinheit
- 67: Kamera
- 68: Sensorabschnitt
- 69: Ultraschallsensor
- 70: Speicher
- 71: laserbasierter Sensor
- 72: Borstenabschnitt
- 74: Selbststabilisierungseinrichtung
- 76: Kommunikationseinrichtung
- 78: Tragegriff
- 80: Nut
- 81: Transportsystem
- 82: Querholz
- 84: Brett
- 86: Master
- 88: Slave
- 90: Master-Sensoreinheit
- 92: Werkhalle
- 94: Kontrolleinheit
- 96: Ladefläche
- 98: Spreizeinrichtung
- 100: Spreizarm
- 102: Führungsbahn
- 104: Kreissektorelement
- 106: Verstelleinheit
- 107: weitere Antriebseinheit
- 108: Kniehebeleinheit
- 109: Antriebsstrang
- 110: Synchronisierungseinheit
- 111: erstes Zahnrad
- 112: Kulissenscheibe
- 113: zweites Zahnrad
- 114: Anschlagelement
- 115: Entkopplungseinheit
- 116: Abstützelement
- 117: Kurvenscheibe
- 118: Feder
- 119: Lagereinheit
- 120: Nut
- 121: Winkelsensor
- 122: Pin
- 124: Abtriebswelle
- 126: Kupplungselement
- 128: erste Stirnfläche
- 130: zweite Stirnfläche
- 132: erste Stirnverzahnung
- 134: zweite Stirnverzahnung
- 136: Rückstellfeder
- 138: Sperreinrichtung
- 140: Anschlag

- AP: plane Außenfläche
- AW: gewölbte Außenfläche
- D: gemeinsame Drehachse
- D1: erste Drehachse
- D2: zweite Drehachse
- R: Rotationsachse

## Patentansprüche

1. Fahrerlose Transportvorrichtung (10) zum Transportieren von Gegenständen (38) umfassend
- eine Tragstruktur (12) mit einer Außenkontur (14),
- ein an der Tragstruktur (12) befestigtes Fahrwerk (16) mit zumindest einem ersten Rad (18) und einem zweiten Rad (20), wobei das erste Rad (18) um eine erste Drehachse (D1) und das zweite Rad (20) um eine zweite Drehachse (D1) drehbar im Fahrwerk (16) gelagert sind,
- eine Antriebseinheit (22), mit welcher das erste Rad (18) und das zweite Rad (20) unabhängig voneinander antreibbar sind, und
- einen Speicher (70) für elektrische Energie, welcher in der Draufsicht abschnittsweise über die Außenkontur (14) der Tragstruktur (12) hervorragt, wobei der Speicher (70) bewegbar an der Tragstruktur (12) befestigt ist.

2. Fahrerlose Transportvorrichtung (10) nach Anspruch 1,
**dadurch gekennzeichnet, dass** der Speicher (70) um die Rotationsachse (R) drehbar an der Tragstruktur (12) befestigt ist.

3. Fahrerlose Transportvorrichtung (10) nach einem der Ansprüche 1 oder 2,
**dadurch gekennzeichnet, dass** der Speicher (70) lösbar an der Tragstruktur (12) befestigt.

4. Fahrerlose Transportvorrichtung (10) nach einem der vorherigen Ansprüche,
**dadurch gekennzeichnet, dass** die fahrerlose Transportvorrichtung (10) eine mit der Tragstruktur (12) zusammenwirkende Hubeinrichtung (32) zum Anheben und Absenken zumindest eines Tragabschnitts (39), der zum Transportieren der Gegenstände mit denselben zusammenwirkt, umfasst.

5. Fahrerlose Transportvorrichtung (10) nach einem der vorherigen Ansprüche,
**dadurch gekennzeichnet, dass**
- die Außenkontur (14) der Tragstruktur (12) in der Draufsicht um eine Rotationsachse (R) im Wesentlichen rotationssymmetrisch ist, und
- der Tragabschnitt (39) und/oder das erste Rad (18) und das zweite Rad (20) innerhalb der Außenkontur (14) angeordnet sind oder bündig mit der Außenkontur (14) abschließen.

6. Fahrerlose Transportvorrichtung (10) nach einem der vorherigen Ansprüche,
**dadurch gekennzeichnet, dass**
- die Transportvorrichtung (10) eine Sensoreinheit (66) zum Erfassen des Umfelds der Transportvorrichtung (10) aufweist, wobei
- die Sensoreinheit (66) in einem von der Außenkontur (14) und der ersten Drehachse (D1) oder der zweiten Drehachse (D2) begrenzten Sensorabschnitt (68) angeordnet ist, und
- die Sensoreinheit (66) so ausgebildet ist, dass sie nur den Teil des Umfelds auf der Seite der ersten Drehachse (D1) oder der zweiten Drehachse (D2) erfasst, auf welcher die Sensoreinheit (66) angeordnet ist.

7. Fahrerlose Transportvorrichtung (10) nach Anspruch 5,
**dadurch gekennzeichnet, dass** der Speicher (70) außerhalb des Sensorabschnitts (68) angeordnet ist.

8. Fahrerlose Transportvorrichtung (10) nach einem der vorherigen Ansprüche,
**dadurch gekennzeichnet, dass** die Transportvorrichtung (10) zumindest ein Stützrad und/oder einen Borstenabschnitt (72) aufweist.

9. Fahrerlose Transportvorrichtung (10) nach einem der vorherigen Ansprüche,
**dadurch gekennzeichnet, dass** sämtliche Räder (18, 20) um eine gemeinsame Drehachse (D) drehbar angeordnet sind und die fahrerlose Transportvorrichtung (10) eine Selbststabilisierungseinrichtung (74) aufweist.

10. Fahrerlose Transportvorrichtung (10) nach einem der vorherigen Ansprüche,
**dadurch gekennzeichnet, dass** die Transportvorrichtung (10) einen Signalgeber (64) zum Ausgeben eines Hinweissignals aufweist.

11. Fahrerlose Transportvorrichtung (10) nach einem der vorherigen Ansprüche,
**dadurch gekennzeichnet, dass** die Transportvorrichtung (10) einen Tragegriff (78) zum Ergreifen der Transportvorrichtung (10) aufweist.

12. Fahrerloses Transportsystem (81), umfassend
- eine Mehrzahl von fahrerlosen Transportvorrichtungen (10) nach einem der vorherigen Ansprüche,
- eine Kontrolleinheit (94) zum Steuern oder Regeln der fahrerlosen Transportvorrichtungen (10), und
- eine Kommunikationseinrichtung (76), mit welcher Informationen zwischen der Kontrolleinheit (94) und den fahrerlosen Transportvorrichtungen (10) ausgetauscht werden können.

13. Fahrerloses Transportsystem (81) nach Anspruch 11,
**dadurch gekennzeichnet, dass**
- eine der fahrerlosen Transportvorrichtungen (10) als ein Master (86) ausgebildet ist und die übrigen der fahrerlosen Transportvorrichtungen (10) als Slaves (88) ausgebildet sind,
- der Master (86) eine Master-Sensoreinheit (90) zum Erfassen des Umfelds des Masters (86) aufweist, und
- der Master (86) das Umfeld des Masters (86) betreffende Informationen an die Kontrolleinheit (94) und/oder an die Slaves (88) übermittelt.

14. Fahrerloses Transportsystem (81) nach Anspruch 11,
**dadurch gekennzeichnet, dass**
- jede der Transportvorrichtungen (10) jeweils eine Sensoreinheit (66) zum Erfassen des Umfelds der Transportvorrichtung (10) aufweist, wobei
- die Sensoreinheit (66) in einem von der Außenkontur (14) und der ersten Drehachse (D1) oder der zweiten Drehachse (D2) begrenzten Sensorabschnitt (68) angeordnet ist, und
- die Sensoreinheit (66) so ausgebildet ist, dass sie nur den Teil des Umfelds auf der Seite der ersten Drehachse (D1) oder der zweiten Drehachse (D2) erfasst, auf welcher die Sensoreinheit (66) angeordnet ist, wobei
- zumindest eine erste der Sensoreinheiten in eine erste Richtung und zumindest eine zweite der Sensoreinheiten in eine zweite Richtung ausgerichtet sind.
